(19) Europäisches Patentamt
European Patent Office
Office européen des brevets

(11) **EP 1 542 151 B1**

(12) **EUROPÄISCHE PATENTSCHRIFT**

(45) Veröffentlichungstag und Bekanntmachung des Hinweises auf die Patenterteilung:
**30.09.2009   Patentblatt 2009/40**

(51) Int Cl.:
***G06K 9/00*** *(2006.01)*

(21) Anmeldenummer: **04029189.0**

(22) Anmeldetag: **09.12.2004**

(54) **Verfahren und Anordnung zur elektronischen Aufnahme abgerollter Fingerabdrücke**

Method and apparatus for the electronic capture of rolled fingerprints

Procédé et dispositif d'acquisition électronique des empreintes digitales déroulées

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **11.12.2003   DE 10358738**

(43) Veröffentlichungstag der Anmeldung:
**15.06.2005   Patentblatt 2005/24**

(73) Patentinhaber: **Cross Match Technologies GmbH**
**07743 Jena (DE)**

(72) Erfinder:
• **Morgeneier, Dirk**
**07749 Jena (DE)**
• **Friedl, Andy**
**07607 Eisenberg (DE)**
• **Eichhorn, Torsten**
**07743 Jena (DE)**
• **Standau, Jörg**
**07743 Jena (DE)**
• **Gerling, Torsten**
**07751 Drackendorf (DE)**

(74) Vertreter: **Freitag, Joachim et al**
**Patentanwälte**
**Oehmke & Kollegen**
**Neugasse 13**
**07743 Jena (DE)**

(56) Entgegenhaltungen:
**WO-A-99/56236        US-B1- 6 483 932**

• **RATHA N K ET AL: "Image mosaicing for rolled fingerprint construction" PATTERN RECOGNITION, 1998. PROCEEDINGS. FOURTEENTH INTERNATIONAL CONFERENCE ON BRISBANE, QLD., AUSTRALIA 16-20 AUG. 1998, LOS ALAMITOS, CA, USA,IEEE COMPUT. SOC, US, 16. August 1998 (1998-08-16), Seiten 1651-1653, XP010297812 ISBN: 0-8186-8512-3**

**Beschreibung**

Die Erfindung betrifft ein Verfahren und eine Anordnung zur elektronischen Aufnahme eines bewegten Objekts, insbesondere zur Aufnahme eines auf einer Auflagefläche abgerollten Fingers. Die Erfindung findet vornehmlich Anwendung für die Erstellung elektronischer Fingerabdrücke, kann aber ebenso vorteilhaft bei der Objektverfolgung zur intelligenten Steuerung eines in Position und/oder Größe variablen Abtastfensters eingesetzt werden.

Der Hintergrund für die Verwendung von Fingerabdrücken in der Kriminalistik liegt an der Einmaligkeit der Hautleistenbilder, die nicht vererbbar sind und die ab dem vierten embryonalen Monat bis zur Auflösung nach dem Tode unveränderlich sind. Als Bildvorlage kann der Finger selbst, ein mittels Tinte auf Papier aufgebrachter Fingerabdruck oder ein Spurenphotogramm dienen. Die letzteren beiden Techniken wurden und werden vornehmlich durch die Polizei angewendet. Mit Hilfe von Mustererkennungstechniken, die in der Lage sind, die charakteristischen Merkmale eines Fingerabdrucks zu extrahieren, ist es möglich, die Identifikation und Verifikation von Fingerabdrücken zu automatisieren.

In den letzten Jahren wurden die oben erwähnten Techniken zunehmend in elektronische Systeme integriert, die es gestatten, den Finger direkt aufzunehmen. Damit verkürzt sich die Aufnahme- und Auswertezeit, wodurch sich gleichzeitig die Qualität der Bilder verbessern lässt. Wurde ein Finger nicht richtig erfasst, ist es dadurch möglich, den Vorgang der Aufnahme dieses einen Fingers sofort zu wiederholen.

Die elektronische Bildaufnahme von Fingerabdrücken erfolgt meist mit Matrix- oder Zeilensensoren auf Basis von CCD- oder CMOS-Technik. Dabei wird der Fingerabdruck als Bildvorlage durch spezielle Optiken und Sensoren in ein elektronisches Bild umgewandelt und anschließend digitalisiert, wodurch ein Rasterbild mit einer festen Orts- und Grauwertauflösung entsteht.

Zur Aufnahme von elektronischen Fingerabdrücken können aber auch kapazitive, thermische, ultraschallbasierte oder drucksensitive Sensoren verwendet werden.

Von der Polizei werden neben der Aufnahme von bloßen Abdrücken der Finger vor allem auch Abbilder abgerollter Finger erstellt.

Dabei ist die Prozedur zur Herstellung abgerollter Fingerabdrücke mit Tinte und Papier hinreichend einfach, indem auf den Finger Tinte aufgetragen und der Finger danach auf Papier abgerollt wird. Rotation und VerformungenNerschmierungen an den Enden des Fingers werden dabei akzeptiert und sind zulässig.

Bei elektronischen Systemen ist eine solche Prozedur etwas aufwendiger. Hier wird, je nachdem wie der Finger elektronisch erfasst wird (mit Zeile oder Matrix), ein Gesamtbild aus vielen Einzelbildern zusammengesetzt. Dabei besteht das Problem, das gegenüber dem Abrollen mit Tinte auf Papier keine komplette Aufnahme, sondern eine Vielzahl zeitdiskreter Abtastungen entsteht, die einen Informationsverlust in sich bergen. Die Ursachen für den Informationsverlust sind neben der Verformung des Fingers und den darausfolgenden Veränderungen zu zwei unterschiedlichen Zeitpunkten besonders in einer zu geringen zeitlichen Abtastung des Fingers durch die Bildaufnahmeeinheit begründet. D.h., um sicherzustellen, dass ein Finger korrekt aufgenommen wird, muss die Bildaufnahmeeinheit - je nach verwendetem Verfahren des Zusammensetzens - eine Mindestbildrate aufweisen, damit störende Vorgänge, wie z.B. Verdrehen oder Verrutschen beim Abrollvorgang des Fingers, detektiert werden können.

Methoden, wie man von den unvermeidlichen Einzelbildern zu einem fehlerminimierten Gesamtbild kommt, sind mehrfach beschrieben worden, wobei zur Erstellung des Abbildes eines abgerollten Fingers stets von einer sukzessive aufgenommenen Folge elektronischer Einzelbilder ausgegangen wird. Das Gesamtbild wird aus diesen Einzelbildern mittels verschiedenster Verfahren zusammengesetzt. Hierbei werden - die Einzelbilder in Streifen zerlegt.

In den Druckschriften US 4,933,976, US 5,230,025, US 6,483,932, WO 97/41528 und DE 198 51 544 C1 (WO 00/28470) wird aus den Einzelbildern jeweils ein Streifen entnommen und das Gesamtbild aus diesen Streifen zusammengesetzt. Die oben genannten Patentschriften unterscheiden sich voneinander durch ihre unterschiedlichen Algorithmen, mit denen die Streifen bestimmt und zusammengefügt werden, um möglichst nur die Teile der Einzelbilder zusammenzufügen, die der tatsächlichen Kontaktfläche des Fingers entsprechen.

Bei allen oben aufgeführten Druckschriften haben die von der Bildaufnahmeeinheit kommenden Einzelbilder eine feste Größe und basieren auf einem festgelegten Zeitregime (vorgegeben durch einen Taktgenerator oder einen Ereignistrigger). Dadurch können die Abrollgeschwindigkeit (und gegebenenfalls deren Änderung) sowie die Größe der Fingerkontaktfläche (und deren reale Änderung im Abrollvorgang) im Ausleseregime der Bildaufnahmeeinheit nicht berücksichtigt werden.

Um ein korrektes Berechnen des Ergebnisbildes zu ermöglichen, müssen zwei benachbarte Fingerabdruckstreifen eine für das jeweilige Verfahren hinreichend große Schnittmenge haben. Das kann nur erreicht werden, wenn beim Abrollen des Fingers eine schnelle zeitliche Abtastung erfolgt. Dies wird derzeit durch Sensoren mit einer hohen Bildauslesegeschwindigkeit (Bildrate) von mehr als 25 Bilder/Sekunde (B/s) realisiert. Bei Erhöhung der Ortsauflösung (z.B. von 500 dpi auf 1000 dpi) stößt man damit allerdings an die technischen Grenzen. Entweder verringert sich die Bildrate (z.B. beim Übergang von 500 dpi zu 1000 dpi Reduzierung der Bildrate auf $^1/4$) oder der Preis des Sensors mit seiner Elektronik wird unakzeptabel hoch.

Der Erfindung liegt deshalb die Aufgabe zugrunde, eine neue Möglichkeit zur elektronischen Aufnahme von abgerollten Fingerabdrücken zu finden, die hochaufgelöste Einzelbilder und eine enge Bildfolge zur lückenlosen Zusammensetzung der Einzelbilder zu einem Gesamtbild gestattet, ohne dass auf teure Bildsensoren mit hoher Bildrate (Auslesegeschwindigkeit) zurückgegriffen werden muss.

Erfindungsgemäß wird die Aufgabe bei einem Verfahren zur elektronischen Aufnahme eines bewegten Objekts, insbesondere zur Aufnahme eines an einer Aufnahmefläche abgerollten Fingers, wobei das Objekt mit seinen Strukturen während der Bewegung mittels einer ortsauflösenden Bildaufnahmeeinheit in einer Folge von Einzelbildern erfasst und als zweidimensionales elektronisches Bild verarbeitet wird, dadurch gelöst, dass aus Lage und Größe des Objekts in mindestens einem der aus der Bildaufnahmeeinheit ausgelesenen einzelnen Bilder eine das Objekt umschließende Figur ermittelt wird, dass aus der umschließenden Figur ein durch Toleranzzugaben vergrößertes Rechteck, das parallel zu Zeilen- und Spaltenrichtung des Sensors ausgerichtet ist, bestimmt wird, und dass das vergrößerte Rechteck zur Vorhersage und Einstellung der Größe und Lage eines aktiven Pixelbereichs der Bildaufnahmeeinheit für mindestens ein nachfolgend auszulesendes Bild verwendet wird, so dass der ausgelesene aktive Pixelbereich der Bildaufnahmeeinheit infolge seiner Anpassung stets klein gehalten und eine höhere Bildrate bei der Sensorauslesung oder Datenübertragung realisiert wird.

Vorteilhaft wird die umschließende Figur des Objektabbildes des aktuell abgetasteten Bildes durch je ein in Spalten- und in Zeilenrichtung gebildetes Gradientenbild ermittelt, wobei zur Erzeugung des Gradientenbildes für jedes Pixel eine Differenz benachbarter Grauwerte in Zeilen- oder in Spaltenrichtung gebildet wird.

Dabei ist es zweckmäßig, zur Erstellung jedes Pixels des Gradientenbildes die Differenz benachbarter Grauwerte aus den Grauwerten des Vorgänger- und des Nachfolgerpixels des aktuell untersuchten Pixels der Zeile oder Spalte zu bilden.

Um Ränder des Fingerabdrucks besonders zuverlässig extrahieren zu können, werden die Pixel jedes Gradientenbildes vorzugsweise aus der Differenz der Grauwerte des Vorvorgänger- und des Nachnachfolgerpixels des aktuell untersuchten Pixels der Zeilen bzw. Spalten gebildet.

Für ein aktuelles Bild werden vorteilhaft aus mindestens einem Gradientenbild der Zeilen oder Spalten, das in Richtung der Objektbewegung ausgerichtet ist, Start- und Endwerte der umschließenden Figur des Objektabbildes ermittelt, wobei eine erste und eine letzte signifikante Differenz benachbarter Grauwerte je Zeile bzw. Spalte zur Berechnung der Start- und Endwerte der das Objekt umschließenden Figur bestimmt wird.

Die signifikanten Differenzen werden zweckmäßig durch Überschreiten von Schwellwerten ermittelt.

Es erweist sich als vorteilhaft, in mindestens einer Dimension, die der Hauptbewegungsrichtung des Objekts entspricht, von den aus dem Gradientenbild ermittelten Start- und Endwerten einen Mittelwert oder einen Medianwert zu berechnen, wobei die Mittel- bzw. Medianwerte dann lineare Grenzen einer das Objektabbild rechteckig umschließenden Figur bilden.

In einer vorzuziehenden Ausführung werden die Start- und Endwerte mindestens aus dem Gradientenbild, das der Hauptbewegungsrichtung des Objekts entspricht, in ein Ortshistogramm eingetragen, wobei die Orte, an denen die integrale Häufigkeitsverteilung einen signifikanten Schwellwert erreicht, die Grenzen einer das Objektabbild rechteckig umschließenden Figur bilden. Dieser Schwellwert kann sinnvoll 5% der integralen Häufigkeitsverteilung sein. Es ist aber auch möglich, den Maximalwert der Häufigkeitsverteilung zu wählen

Zur Einsparung von Rechen- und Speicherkapazität erweist es sich von Vorteil, für die Ermittlung der Grenzen der rechteckig umschließenden Figur nur die Start- und Endwerte ausgewählter Zeilen oder Spalten des Gradientenbildes zu verwenden.

Um eine Beschneidung des Objektabbildes zu vermeiden, wird eine Toleranzzugabe zur Erzeugung des vergrößerten Rechtecks zweckmäßig in Abhängigkeit von einem detektierten Bewegungsablauf des Objekts unterschiedlich festgelegt, wobei aus mindestens zwei vorhergehend ausgelesenen Bildern nach der Bestimmung der Grenzen der jeweils umschließenden Figur unterschiedliche Bewertungsalgorithmen auf Basis der zeitlichen Veränderung der Grenzen der umschließenden Figur in den aufeinander folgenden Bildern angewendet werden.

Vorzugsweise wird als Objekt ein auf einer Aufnahmefläche abrollender Finger erfasst, wobei als Objektabbild in jedem ausgelesenen Bild ein Fingerabdruck als momentane Auflagefläche des Fingers aufgenommen wird.

Dabei werden zur Einstellung der Grenzen der einzelnen Bilder vorteilhaft folgende Schritte auf jedes der ausgelesenen Bilder angewendet:

- eine Auflageerkennungs-Routine, die bei Ermittlung einer nicht ausreichenden Anzahl von durch einen Fingerabdruck hervorgerufenen Differenzwerte die Berechnung der Toleranzzugabe und nachfolgende Vorhersagen und Einstellungen des aktiven Pixelbereichs der Bildaufnahmeeinheit unterbindet;
- eine Bewegungsverfolgungs-Routine, die bei nicht deutlich gerichteter Bewegung der umschließenden Figur eines Fingerabdrucks eine allseitig gleichmäßige Toleranzzugabe um die Grenzen der umschließenden Figur herum bestimmt, die so groß gewählt wird, dass bei beliebiger Bewegung des Objekts in objekttypischem Maße das vergrößerte Rechteck das Objekt innerhalb der Zeit der Auslesung wenigstens eines nächsten Bildes nicht beschneidet; und
- eine Abrollverfolgungs-Routine überführt wird, wenn sich in einer definierten Anzahl von aufeinanderfolgenden Bildern die Grenzen der umschließenden Figur deutlich in eine ausgezeichnete Richtung verschoben haben, wobei für die in Bewegungsrichtung des Objekts bewegte Grenze der umschließenden Figur aus einer errechneten Geschwindigkeit der bewegten Grenze eine solche Toleranzzugabe ermittelt wird, dass das vergrößerte Rechteck das momentane Objektabbild (Fingerabdruck) innerhalb der Zeit von wenigstens einem nachfolgend ausgelesenen Bild nicht beschneidet.

Da die Abrollverfolgungsroutine das Kernstück der Bildaufnahme eines abgerollten Fingers darstellt, um eine vollständige und zeitlich hochaufgelöste Serie von einzelnen Bildern für die Zusammensetzung des kompletten Abdrucks eines abgerollten Fingers zur Verfügung zu stellen, wird die Abrollverfolgung zweckmäßig durch eine Abrollstarterkennung, die bei Vorliegen einer bestimmten festgelegten Zahl von in gleicher Richtung fortschreitenden Verschiebungen der Grenzen der umschließenden Figur die Bewegungsverfolgung in die Abrollverfolgung umschaltet, eingeleitet und durch eine Abrollschlusserkennung, die bei einer Richtungsumkehr der Bewegung der Grenzen der umschließenden Figur die Abrollverfolgung abbricht, beendet.

Beim Abrollen eines Fingers entlang einer Aufnahmefläche wird innerhalb der Abrollstarterkennung vorteilhaft eine Zwischenspeicherung aller zur Starterkennung verwendeten Bilder vorgenommen, um die bereits ausgelesenen Bilder für die spätere vollständige Zusammensetzung des abgerollten Fingers zur Verfügung zu halten.

Des Weiteren wird die Aufgabe der Erfindung bei einer Anordnung zur elektronischen Aufnahme eines bewegten Objekts, insbesondere zur Aufnahme eines an einer Aufnahmefläche abgerollten Fingers, mit einer Bildaufnahmeeinheit zur Aufnahme einer Folge von zweidimensionalen Einzelbildern eines bewegten Objekts, wobei zur Zusammensetzung eines Gesamtbildes des bewegten Objekts die Einzelbilder örtliche Überlappungen aufweisen, erfindungsgemäß dadurch gelöst, dass der Bildaufnahmeeinheit eine Logikeinheit zur laufenden Berechnung eines eingeschränkten Pixelbereichs, der das Objektabbild eng einschließt, auf Basis mindestens eines von der Bildaufnahmeeinheit zuvor ausgelesenen Bildes, nachgeordnet ist, dass der Logikeinheit ein Programmspeicher, ein Datenspeicher, ein Prozessor und ein Interface zugeordnet sind, wobei der Prozessor zur Steuerung der Datenflüsse vorgesehen ist, und dass das Interface zum Datentransfer der Bilder, die von der Logikeinheit bezüglich Größe und Lage Ihres Pixelbereichs definiert gesteuert sind, an eine externe Rechnereinheit vorhanden ist, wobei die Rechnereinheit die Bildverarbeitung zum Zusammensetzen der zeitlich aufeinanderfolgend aufgenommenen Bilder zu einem Gesamtbild enthält.

Die Bildaufnahmeeinheit weist vorzugsweise einen optoelektronischen Sensor auf, kann aber auch mit einem kapazitiven, induktiven, thermischen, Ultraschall- oder andersartigen Kontaktsensor ausgestattet sein. Als optoelektronische Bildaufnehmer werden zweckmäßig CCD-Arrays oder CMOS-Arrays (jeweils als Matrix- oder Zeilenanordnung) verwendet.

Vorteilhaft kann die Bildaufnahmeeinheit auch einen Sensor mit niedriger Bildrate (< 25 B/s) enthalten, bei dem die niedrige Bildrate nur auf die Auslesung aller Pixel des Sensors bezogen ist, die Auslesung von Bildern aus einem beliebig programmierbaren aktiven Pixelbereich jedoch mit wesentlich größerer Bildrate realisierbar ist. In einer erweiterten Variante der Erfindung weist die Bildaufnahmeeinheit vorzugsweise einen großflächigen Sensor auf, bei dem durch eine einzige Sensorauslesung ein kompletter Fuß- oder Handabdruck mit hoher Auflösung, aber niedriger Bildrate realisierbar ist, bei dem zur Aufnahme einzelner abgerollter Finger ein definierter Teilbereich der Aufnahmefläche festgelegt ist, wobei der Sensor in einem entsprechend beschränkten aktiven Pixelbereich, der dem definierten Teilbereich der Aufnahmefläche für den abzurollenden Finger zugeordnet ist, zur Auslesung von pixelreduzierten Bildern ansteuerbar ist, so dass die Bildrate zur Aufnahme abgerollter Fingerabdrücke gegenüber der von Fuß- oder Handabdrücken erheblich erhöht wird.

In einer modifizierten Variante der Erfindung kann die Bildaufnahmeeinheit auch ein Sensor mit hoher Bildrate ($\geq$ 25 B/s) sein, bei dem das Interface das begrenzende Element der Datenübertragung darstellt, so dass nur ein geringer Teil der Bilddaten in "Echtzeit" übertragen werden kann. In diesem Fall erfolgt die erfindungsgemäße Auslesung von datenreduzierten Bildern aus beliebig zugriffsfähigen Pixelbereichen des Datenspeichers, um nachfolgend die Datenrate der Übertragung über das Interface zu erhöhen.

Das erfindungsgemäße Verfahren der Bestimmung der Grenzen des aktiven Pixelbereichs findet vorteilhaft in einer (der Recheneinheit zum Zusammensetzen der Bilder des Objekts) vorgeordneten Logikeinheit (Hardware) statt, die zweckmäßig ein FPGA (frei programmierbares Gate Array) ist. Als Logikeinheit kann auch ein PLD (programmierbares Logikelement) oder ein ASIC (anwendungsspezifizierter integrierter Schaltkreis) verwendet werden. Der zur Steuerung der Prozesse und Datenströme der Logikeinheit verwendete Prozessor kann vorteilhaft ein Mikroprozessor (MPU), ein Digitalsignalprozessor (DSP) oder ein Mikrocontroller (MCU) sein. Der Prozessor kann auch direkt in die Logikeinheit, den Programmspeicher oder die externe Rechnereinheit integriert sein.

Die Erfindung basiert auf der Grundidee, ein als Funktion G(x,y) darstellbares Grauwertbild von veränderlicher Oberflächengröße und/oder -struktur, bei dem x und y die Koordinaten eines jeweiligen Bildpunktes des Bildes sind und G dessen Grauwerte bezeichnet elektronisch aufzunehmen. Ein bewegtes Objekt mit derartiger Bildcharakteristik wird über verschiedene Zeitpunkte $t_n$ sequenziell mit $t_{n+1} > t_n$ mit unterschiedlichen Ansichten als Funktion $G_n$ aufgenommen, um das Gesamtbild G aus Bildern $G_n(x,y)$ zu bilden, wobei von der Bildaufnahmeeinheit nur interessierende Teilstücke der Objektoberfläche aufgenommen werden, deren Größe in Abhängigkeit von der Rotationsgeschwindigkeit des Objekts variieren.

Das Wesen des erfindungsgemäßen Verfahrens besteht darin, aus jedem aktuell ausgelesenen Bild jeweils für das nächste Bild einen angepassten beschränkten Pixelausschnitt zu definieren bzw. vorherzusagen, der mit der notwendigen Sicherheit den zu erfassenden Fingerabdruck vollständig enthält und als Auslesefenster der Bildaufnahmeeinheit eingestellt wird, um die Ausleserate (Bildrate) der Bildaufnahmeeinheit zu erhöhen. Auf diese Weise ist es möglich, preiswerte Sensoren zu verwenden, die nicht die ansonsten erforderliche hohe Bildrate von ≥ 25 B/s für die Auslesung kompletter Einzelbilder erfüllen, aber über eine sogenannte WOI-Einstellbarkeit (WOI - Window of Interest) verfügen und dabei die volle örtliche Auflösung haben. In der CMOS-Technologie wird diese Applikation je nach Hersteller "Window of Interest" bzw. "Region of Interest", "Active Window" und "Windowing" genannt. In der CCD-Technologie hat sich der Name "Fast Dump" für das Überspringen von Zeilen und "Overclocking" für das Übertakten der nicht benötigten Spalten etabliert.

Mit der Erfindung ist es möglich, eine elektronische Aufnahme von abgerollten Fingerabdrücken zu realisieren, die an die Objektgröße und -bewegung angepasste, hochaufgelöste Bilder in enger Folge generiert und deren zuverlässige Zusammensetzung der Bilder zum Gesamtbild gestattet, ohne dass auf teure Bildsensoren oder Interfaces mit hoher Bildrate zurückgegriffen werden muss. Dabei gestattet die Erfindung, die Bildrate viel höher zu wählen, als dies mit den gegenwärtig eingesetzten hochauflösenden Sensoren oder Bildverarbeitungs-Interfaces bei kompletter Auslesung der Bildfläche möglich ist. Außerdem sind aufgrund der elektronischen Anpassung des Sensor-Auslesefensters Anwendungen, wie die Aufnahme einer kompletten Hand und das Abrollen eines Fingers mit ein und derselben Vorrichtung möglich.

Die Erfindung soll nachstehend anhand von Ausführungsbeispielen näher erläutert werden. Die Zeichnungen zeigen:

Fig. 1:     eine Prinzipdarstellung des erfindungsgemäßen Verfahrens,

Fig. 2:     eine Darstellung des Standes der Technik für die Zusammensetzung von Einzelbildern abgerollter Finger durch unzureichende Abtastdichte der Einzelbilder,

Fig. 3:     eine Darstellung der Probleme des Standes der Technik bei der Zusammensetzung von Papillarlinien abgerollter Finger durch fehlende Überlappung der Einzelbilder,

Fig. 4:     eine Prinzipdarstellung für eine optoelektronische Anordnung zur Gewinnung von Fingerabdrücken eines auf einer Aufnahmefläche abrollenden Fingers,

Fig. 5:     einen Prinzipaufbau der erfindungsgemäßen Steuerungshardware zur Einstellung des aktiven Pixelbereichs für die Auslesung adaptierter, den aktuellen Fingerabdruck sicher einschließender Bilder,

Fig. 6      ein Ablaufschema für eine Auflageerkennungsroutine,

Fig. 7:     ein Ablaufschema für eine Bewegungsverfolgungsroutine zur Bestimmung der den bewegten Finger umschließende Figur mit Hilfe von Ortshistogrammen,

Fig. 8:     eine schematische Darstellung der Festlegung der Startposition für das Abrollen eines Fingers und Einteilung der Aufnahmefläche,

Fig. 9:     eine Prinzipdarstellung der Datenzwischenspeicherung zur Aufbewahrung ausgelesener Bilder, die für die Abrollstarterkennung verwendet wurden, für die nachfolgende Zusammensetzung des Gesamtbildes,

Fig. 10:    eine schematische Darstellung des Abrollens eines Fingers zur Verdeutlichung der unterschiedlichen Größe des Fingerabdrucks, der umschließenden Figur und des vergrößerten Rechtecks,

Fig. 11:    schematische Darstellung des Abrollvorgangs eines Fingers zur Erläuterung der Bestimmung der Geschwindigkeiten und Beschleunigungen der Grenzen der umschließenden Figur des Fingerabdrucks,

Fig. 12:    Darstellung der funktionalen Verläufe von Weg, Geschwindigkeit und Beschleunigung der Grenzen der umschließenden Figur, abgetragen über der Nummer des überstrichenen Sensorpixels,

Fig. 13:    schematische Darstellung der Überwachung der Toleranzzugabe für die Position der Grenze des Rechtecks als aktiver Pixelbereich für die nächste Bildauslesung zur Vermeidung der Beschneidung des Fingerabdrucks im nachfolgenden Bild.

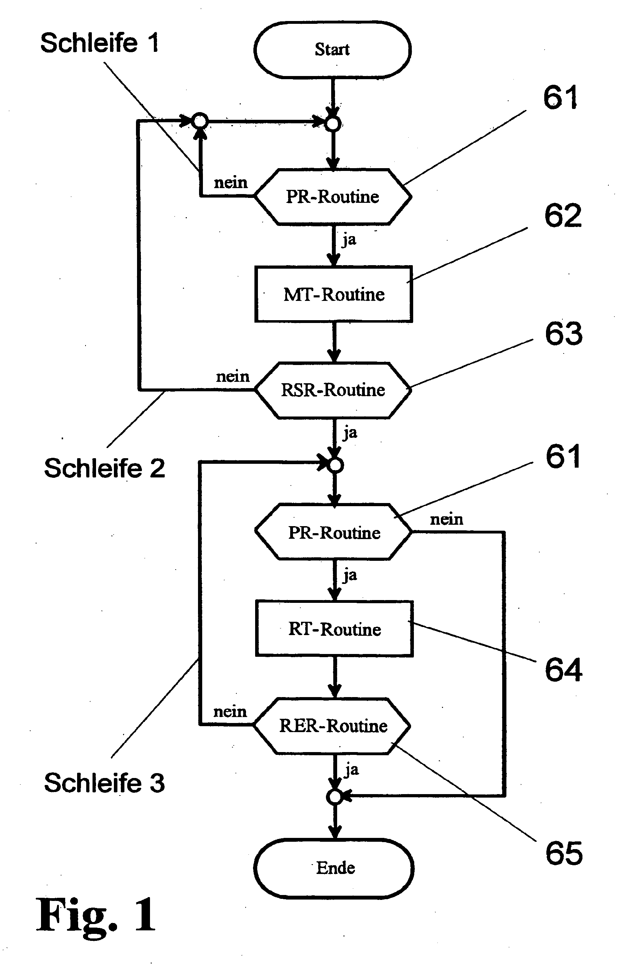

In Fig. 1 ist das Grundprinzip des Verfahrens zur elektronischen Aufnahme eines Abdruckbildes (nachfolgend: Fingerabdruck 11) von der Oberfläche eines Fingers 1 dargestellt. Das Verfahren basiert darauf, dass ein Finger 1 über verschiedene Zeitpunkte sequenziell in unterschiedlichen, einander überlappenden Ansichten aufgenommen wird, um nachfolgend - was nicht Gegenstand der Erfindung ist - ein Gesamtbild des abgerollten Fingers 1 zusammenzusetzen. Aufgrund der vorstehend genannten "Abrollvorschrift" für den Finger 1 kann die Fingeroberfläche nur stückweise als sukzessive Serie von Einzelbildern durch die Bildaufnahmeeinheit 2 aufgenommen werden. Größe und Position der aufgenommenen Bilder 31 variieren dabei in Abhängigkeit von der aktuellen Abdruckfläche und der Abrollgeschwindigkeit des Fingers 1. Dazu wird ein komplexes Steuerverfahren vorgeschlagen, um in Abhängigkeit von der aktuellen Abdruckfläche und der Abrollgeschwindigkeit des Fingers 1 einen angepasst eingeschränkten Ausschnitt bei der Auslesung der Bildaufnahmeeinheit 2 einzustellen und zu überwachen, damit hohe Bildraten erzielt werden können, ohne auf teure Bildsensoren zurückgreifen zu müssen.

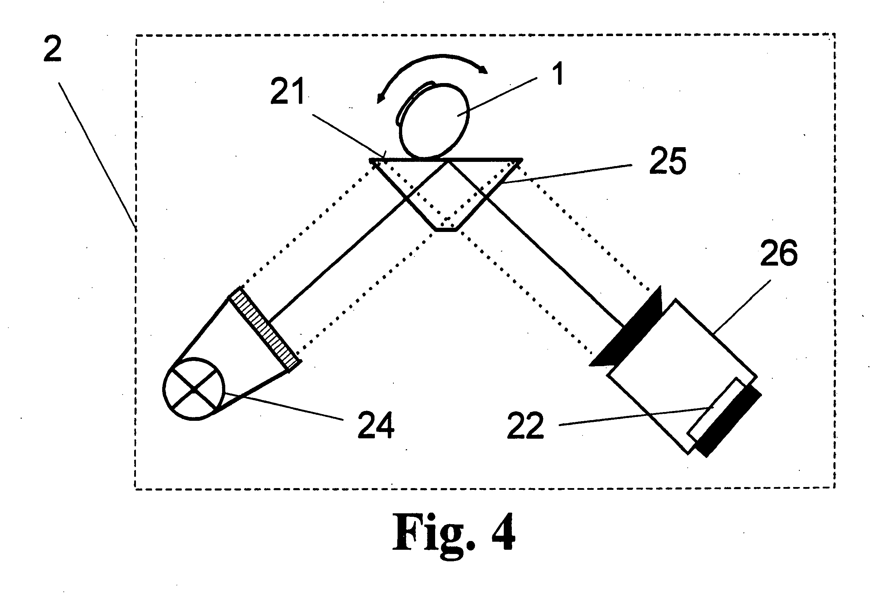

Im Gegensatz zum Abrollen eines Fingers 1 mit Tinte auf Papier findet beim Abrollen auf einer optoelektronischen Bildaufnahmeeinrichtung, wie sie beispielhaft in Fig. 4 angegeben ist, keine kontinuierliche Aufnahme des Abrollvorgangs statt, sondern es werden zeitdiskrete Abtastungen vorgenommen.

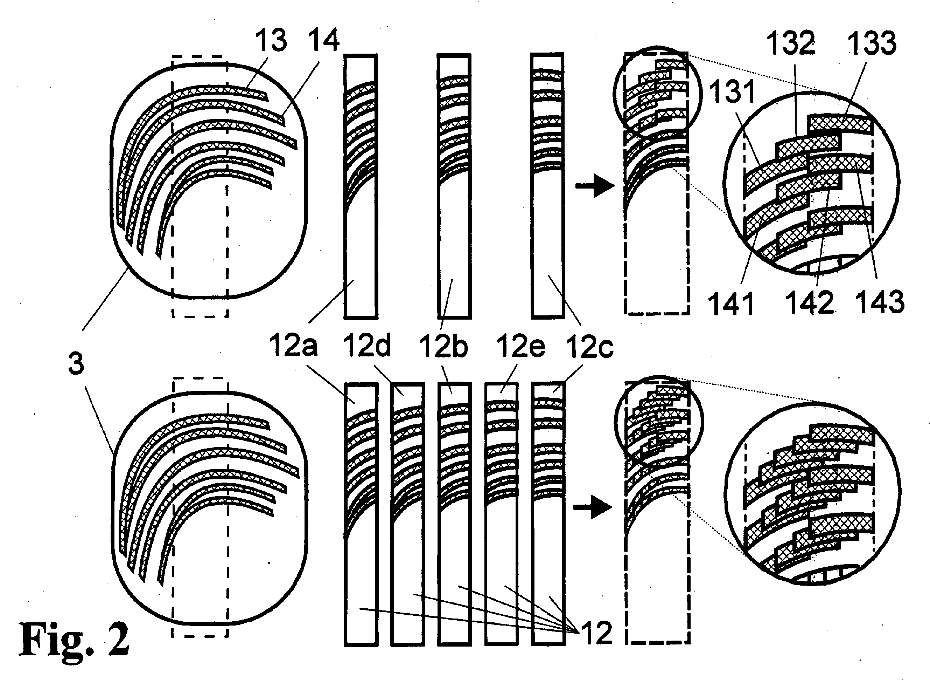

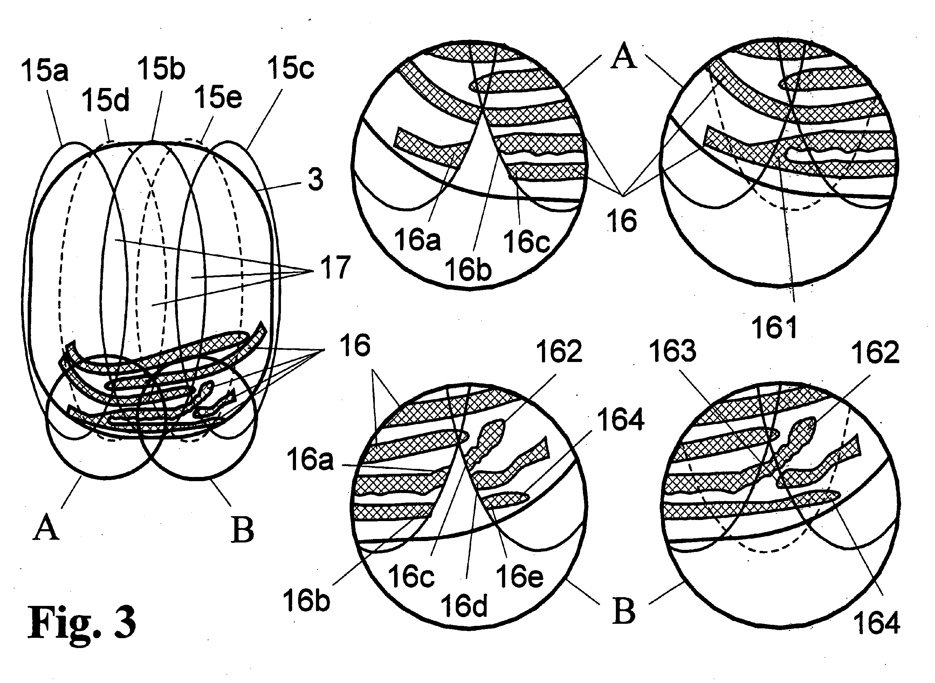

Zur Verdeutlichung der Erfindung wird eine Gegenüberstellung mit dem Stand der Technik vorgenommen, der in Fig. 2 und Fig. 3 schematisch dargestellt ist. Gemäß der herkömmlichen Verfahrensweise nimmt eine Bildaufnahmeeinheit 2, die z.B. mit 25 B/s auslesbar ist, bei einem Abrollvorgang von 3 s Dauer 75 Bilder auf. Jedes dieser 75 Bilder ist ein Vollbild, das den Fingerabdruck 11 zu einem definierten Zeitpunkt in einer bestimmten Lage (Größe und Position) enthält. Um aus diesen Einzelbildern ein Gesamtbild 3 des abgerollten Fingers 1 zu erzeugen, werden aus diesen einzelnen Vollbildern bestimmte Bildstreifen 12 ausgeschnitten, die für das Zusammensetzen die informationsrelevanten Teile des ausgelesenen Bildes repräsentieren. Damit ein korrektes Berechnen des Gesamtbildes 3 erfolgen kann, müssen zwei benachbarte Bildstreifen 12 eine hinreichend große Schnittmenge des Fingerabdrucks 11 haben. Ein gängiges Verfahren, um zwei Bildstreifen 12 zusammenzusetzen, ist die Kreuzkorrelation und das überlappende "Zusammenkitten" der beiden Bildstreifen 12 an der Stelle der größten Übereinstimmung der Randbereiche. Das zeitdiskrete Abtasten birgt jedoch einen Informationsverlust in sich, der durch die Verformung und Bewegung des Fingers 1 und die daraus resultierenden Veränderungen des Abbildes des Fingerabdrucks 11 zu zwei verschiedenen Zeitpunkten der Aufnahme verursacht wird. Dieser Informationsverlust wird größer, wenn sich die Abrollgeschwindigkeit des Fingers 1 gegenüber der Bildrate der Bildaufnahmeeinheit 2 erhöht. D.h. um sicherzustellen, das ein Finger 1 korrekt aufgenommen wird, muss die Bildaufnahmeeinheit 2, zum Zusammensetzen eine Mindestbildrate erfüllen, damit z.B. Vorgänge wie Verdrehen oder Verrutschen beim Abrollvorgang detektiert und korrigiert werden können.

Um die Probleme bei einer zu geringen Auslesegeschwindigkeit der Bildaufnahmeeinheit 2 zu verdeutlichen, ist in **Fig. 2** in der linken Teilansicht stilisiert das Ergebnis eines Gesamtbildes 3 eines abgerollten Fingers 1 gezeigt, wie es beim Abrollen des Fingers 1 mit Tinte auf Papier entsteht und wie es als Gesamtbild 3 durch das Zusammensetzen einer Folge von Einzelbildern erzeugt werden soll.

Das Gesamtbild 3 soll entsprechend den in der rechten oberen Reihe gezeigten Detailaufnahmen eines Fingers 1 aus drei Bildern pro Zeitintervall zusammengefügt werden, wobei gemäß dem Stand der Technik eine Serie von drei Momentaufnahmen des Fingers 1 als Vollbild der gesamten Bildaufnahmeeinheit 2 in einem festen Zeitregime abgetastet werden. Danach werden informationstragende Bildteile extrahiert, wodurch die drei dargestellten Bildstreifen 12a bis 12c entstehen. Ist das Zeitintervall zwischen den Momentaufnahmen zu lang (d.h. ist die Bildrate der Bildaufnahmeeinheit 2 zu niedrig) gegenüber der Bewegung des Fingers 1, so entstehen beim Zusammensetzen des Gesamtbildes 3 selbst bei an sich vorhandener Überlappung der Randbereiche der Bildstreifen 12a bis 12c Zuordnungsprobleme, falls der Finger 1 innerhalb der Abrollbewegung zusätzlich lateral dazu verschoben oder gedreht wurde.

In diesem Abtastbeispiel haben die beiden oberen Papillarlinien 13 und 14 eine Translationsbewegung ausgeführt und die oberste Papillarlinie 13 hat zusätzlich eine Rotationsbewegung erfahren. In der vergrößerten Detaildarstellung rechts oben wird verdeutlicht, dass sich das erste Segment 131 der oberen Papillarlinie 13 aus dem Streifen 12a näher am dritten Segment 143 der nächsten Papillarlinie 14 aus dem Streifen 12c befindet als das zugehörige zweite Segment 132 der oberen Papillarlinie 13 aus dem Streifen 12b. Dadurch kann es zum fehlerhaften Zusammensetzen mindestens der Papillarlinien 13 und 14 im Gesamtbild 3 und somit zu Fehlinterpretationen der Strukturen des abgerollten Fingers 1 kommen.

Deutlich besser geschieht das Zusammensetzen in der unteren Reihe der Detaildarstellungen von **Fig. 2**, die eine Abtastung mit höherer Bildrate symbolisieren, indem mit fünf Bildern pro Zeitintervall gearbeitet wird. Die daraus extrahierten fünf Bildstreifen 12a bis 12e ermöglichen es, die dem Abrollen des Fingers 1 überlagerten Verschiebe- und Rotationsbewegungen mit zu erfassen und somit eine eindeutige, richtige Zusammensetzung der Streifen 12a bis 12e im Gesamtbild 3 zu erreichen, da Sprünge von Papillarlinien von einem Bildstreifen 12 zum nächsten weitgehend eingeschränkt sind und somit nachvollziehbar bleiben.

Einer beliebigen Erhöhung der Bildrate sind jedoch wegen der für das Abrollen des Fingers 1 erforderlichen relativ großen Aufnahmefläche 21 der Bildaufnahmeeinheit 2 Grenzen gesetzt, die vor allem durch die überproportional mit der erhöhten Bildrate steigenden Sensorkosten gegeben sind.

In **Fig. 3** wird ein weiteres Problem der zu geringen Bildauslesegeschwindigkeit dargestellt, indem pro Einzelbildauslesung jeweils die momentane Fläche des Fingerabdrucks 11 durch eine elliptische Fläche dargestellt wird. Die durchgezogenen Ellipsen 15a, 15b und 15c verdeutlichen die Inhalte der zeitlich zu weit auseinanderliegender Abdruckbilder bei herkömmlicher Auslesung preiswerter Bildsensoren, während eine erhöhte Bildrate durch zusätzliche Zwischenabtastungen als gestrichelte Ellipsen 16d und 16e symbolisiert ist, wie sie gemäß der Erfindung mit preiswerten Sensoren oder aber gemäß dem Stand der Technik nur mit sehr teuren Sensoren erzielt wird.

In den oberen und unteren Randbereichen des Fingerabdrucks 11 findet - bedingt durch die Fingergeometrie - die größte Veränderung von einer zur nächsten Einzelbildaufnahme statt. Dadurch ist die Schnittmenge zweier Aufnahmen am Randbereich am kleinsten. Befinden sich nun, wie in **Fig. 3** stilisiert gezeichnet, charakteristische Merkmale, wie eine Papillarlinienverzweigung 161 oder Papillarlinienenden 162, 163 und 164, außerhalb der zeitlich aufeinanderfolgenden als durchgezogene Ellipsen 15a-c gezeichneten Fingerabdruckflächen, so werden dadurch Papillarlinien 16 derart unterbrochen, dass in einem Ergebnisbild (rechte Detaildarstelllungen von Fig. 3) die Linienabtrennung 16a der ersten Ellipse 15a nicht mehr eineindeutig mit den Linienabtrennungen 16b und 16c der nächsten Ellipse 15b des momentan erfassten Fingerabdrucks 11 in Verbindung gebracht werden kann.

In den vergrößerten Detaildarstellungen von **Fig.3** ist deutlich zu sehen, dass es zwischen den zwei benachbarten durchgezogenen Ellipsen 15a und 15b sowie 15b und 15c (als stilisierte momentane Fingerabdrücke 11) jeweils eine Schnittfläche 17 gibt, die nicht über die ganze Breite eines zu **Fig. 2** beschriebenen ausgeschnittenen Bildstreifens 12 geht, so dass Bereiche von Papillarlinien 16 außerhalb der zusammengesetzten Gesamtfläche der Ellipsen 15a, 15b und 15c liegen. Mit den kreisförmigen linken Detaildarstellungen sind zwei solche Bereiche herausgegriffen und vergrößert dargestellt für den Fall, dass die Bildrate zu niedrig ist und somit nur die durchgezogenen Ellipsen 15a bis 15c umfasst. In der oberen linken Detaildarstellung erscheint nach optimaler Korrelation der Ellipsenflächen 15a-c das zusammengesetzte Gesamtbild 3 lückenhaft. Dabei wird die Verzweigung 161 beim Zusammensetzten der Fingerabdruckflächen 15a-c anstelle eines Merkmals als drei Merkmale (Linienenden) abgebildet und somit verfälscht. Selbst mit einer Zusammenhangsanalyse ist nicht zu klären, ob es sich um eine Verzweigung, um einen Linienfortsatz und ein Linienende oder tatsächlich um drei auslaufende Linienenden handelt.

Die untere linke Detaildarstellung von **Fig. 3** zeigt einen anderen kritischen Bereich des abgerollten Fingers 1 zwischen den Ellipsen 15b und 15c, bei dem im kompletten Gesamtbild 3 zwei Papillarlinienenden 162 und 163 und ein in der Abtastlücke liegendes Papillarlinienende 164 zu sehen sind. Dieses lückenbehaftet zusammengesetzte Ergebnisbild zeigt fünf Linienabtrennungen 16a bis 16e, die als fünf Linienenden erscheinen und keine Rückschlüsse auf die Zusammengehörigkeit in irgendeiner Art zulassen. Hier sind bei Zusammenhangsanalysen lediglich Spekulationen möglich, ob bei den Linienabtrennungen 16a bis 16e

- eine einfache Verzweigung von der Linienabtrennung 16a zu den Linienabtrennungen 16c und 16d oder von der Linienabtrennung 16b zu den Linienabtrennungen 16d und 16e und jeweils eine durchgehende Linie von 16b nach 16e oder von 16a nach 16c vorliegt, oder
- eine durchgehende Linie von der Linienabtrennung 16a zu 16c oder 16d oder von 16b zu 16d oder 16e sowie drei Linienenden zu erwarten sind, oder
- zwei durchgehende Linien von den Linienabtrennungen 16a und 16b zu 16c, 16d oder 16e und ein Linienende an einer der Linienabtrennungen 16c bis 16e vorhanden sind.

Das vollständige und richtige Gesamtbild 3 ist nur durch eine höhere Bildrate, symbolisiert durch eine als gestrichelte Ellipse 15e dargestellte Zwischenabtastung des Fingers 1 zwischen den Abdruckellipsen 15b und 15c, zu erhalten, d.h. wenn die Bildrate der Bildaufnahmeeinheit 2 etwa verdoppelt wird. Diese Abtastsituation des Fingers 1 ist in der rechten unteren Detaildarstellung von **Fig. 3** dargestellt und führt auf Basis des Standes der Technik erneut zu der Forderung nach immens teuren Bildsensoren mit hoher Auflösung und wesentlich höherer (z.B. doppelter) Bildrate.

In **Fig. 4** ist eine Bildaufnahmeeinheit 2 für die optoelektronische Bildaufnahme eines Fingers 1 nach dem Prinzip der gestörten Totalreflexion an einer Aufnahmefläche 21 dargestellt. In einem üblichen Grundaufbau besteht die Bildaufnahmeeinheit 2 aus einer diffusen Beleuchtungseinheit 24, einem Prisma 25 und einer Kamera 26 mit einer Abbildungsoptik und einem optoelektronischen Sensor 22. Bei diesem Prinzip ist die Basisfläche des Prismas 25 die eigentliche Aufnahmefläche 21. Das Licht wird durch die Beleuchtungseinheit 24 so in das Prisma 25 eingekoppelt, dass es ohne aufgelegten Finger 1 an der Basisfläche totalreflektiert wird, d.h. wenn der Grenzwinkel für Totalreflexion (hier Glas/Luft) überschritten wird. Damit wird mittels der Abbildungsoptik auf dem Sensor 22 in der Kamera 26 ein hell ausgeleuchtetes Bild erzeugt. Wird ein Finger 1 auf das Prisma 25 gelegt, ändert sich an den Stellen, an denen der Finger 1 aufliegt, der Übergang Glas/Luft zu Glas/Haut. Da die Haut eine höhere Brechzahl als Luft hat, ist der Grenzwinkel der Totalreflexion größer. Die Totalreflexion wird damit an diesen Stellen aufgehoben und das Licht ausgekoppelt. Auf dem Sensor 22, der in der Kamera 26 angeordnet ist, wird deshalb der Finger 1 als Abbild in Schwarz-Weiß-Übergängen abgebildet. Der Sensor 22 wandelt diese Lichtintensitäten in elektrische Signale, die nachfolgend digitalisiert werden, wodurch ein Rasterbild mit einer definierten Orts- und Grauwertauflösung entsteht.

Die optoelektronische Bildaufnahme von Fingerabdrücken 11 erfolgt - ohne Beschränkung der Allgemeinheit - mit Matrix- oder Zeilensensoren auf Basis von CCD- oder von CMOS-Technik.

In der oben beschriebenen Anordnung von **Fig. 4** stellt die Grundseite des Prismas 25 die Aufnahmefläche 21 für den Finger 1 dar. Zur Erläuterung der Erfindung wird nachfolgend zur Vereinfachung - und ohne Beschränkung auf das vorstehend beschriebene Bildaufnahmeprinzip - nur noch auf die Aufnahmefläche 21 und die Bildaufnahmeeinheit 2 Bezug genommen, wobei der abgerollte Finger 1 in der Bildaufnahmeeinheit 2 auf beliebige Art und Weise in ein elektronisches Bild gewandelt und digitalisiert ausgegeben wird.

Es ist für die Aufnahme von Fingerabdrücken 11 ebenso möglich, anstelle eines optoelektronischen Sensors 22 in äquivalenter Weise kapazitive, drucksensitive, ultraschallbasierte oder thermische Sensoren innerhalb einer geeignet gestalteten Bildaufnahmeeinheit zu verwenden.

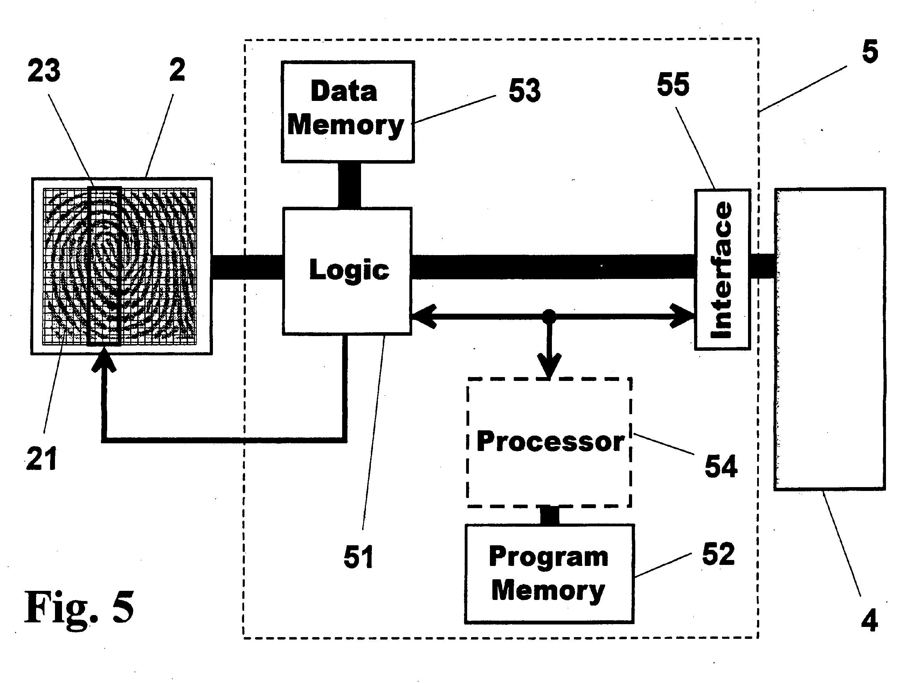

Das erfindungsgemäße Verfahren, das vorzugsweise hardwaremäßig in einer Anordnung gemäß **Fig. 5** realisiert wird, berücksichtigt unterschiedliche Objektflächen und -geschwindigkeiten und sorgt so für eine optimal angepasste Abtastung des bewegten Objekts.

Für die Aufnahme eines abgerollten Fingers 1 kann das Verfahren, wie in **Fig. 1** dargestellt, in folgende Verfahrensabschnitte gegliedert werden:

- Auflageerkennung 61 (<u>P</u>ut-on <u>R</u>ecognition - PR-Routine 61),
- Bewegungsverfolgung 62 (<u>M</u>ovement <u>T</u>racking - MT-Routine 62),
- Abrollstarterkennung 63 (<u>R</u>oll <u>S</u>tart <u>R</u>ecognition - RSR-Routine 63),
- Abrollverfolgung 64 (<u>R</u>oll <u>T</u>racking - RT-Routine 64) und
- Abrollschlusserkennung 65 (<u>R</u>oll <u>E</u>nd <u>R</u>ecognition - RER-Routine 65).

Startpunkt des Verfahrens - wie in **Fig. 1** dargestellt - ist eine (beliebig geartete) Information, die mitteilt, dass ein Abrollvorgang stattfinden soll. Diese Information wird in der Regel durch eine externe Rechnereinheit 4 übermittelt, die die aufgenommenen Daten verarbeitet. Die Information kann aber auch durch ein anderes äußeres System vorgegeben werden, das mit der Anordnung gemäß **Fig. 5** über das Interface kommunikativ in Verbindung steht. Durch diese gesendete Information weiß die Anordnung, dass demnächst ein Finger 1 aufgelegt wird und leitet entsprechende Erkennungsschritte ein.

Mit dieser Aktivschaltung können folgende Erkennungsschritte des Verfahrens ablaufen.

1. Auflageerkennung 61 (PR-Routine)

Die Aufgabe der PR-Routine 61 ist es, in jedem von der Bildaufnahmeeinheit 2 gelieferten Bild 31 zu überprüfen, ob ein gültiger Fingerabdruck 11 auf der Auflagefläche 21 vorliegt oder nicht. Dabei wird aus jedem Bild 31 ein x-Gradientenbild 71 und ein y-Gradientenbild 72 generiert, indem in jeder Zeile bzw. Spalte jeweils Differenzen benachbarter Grauwertpixel gebildet werden.

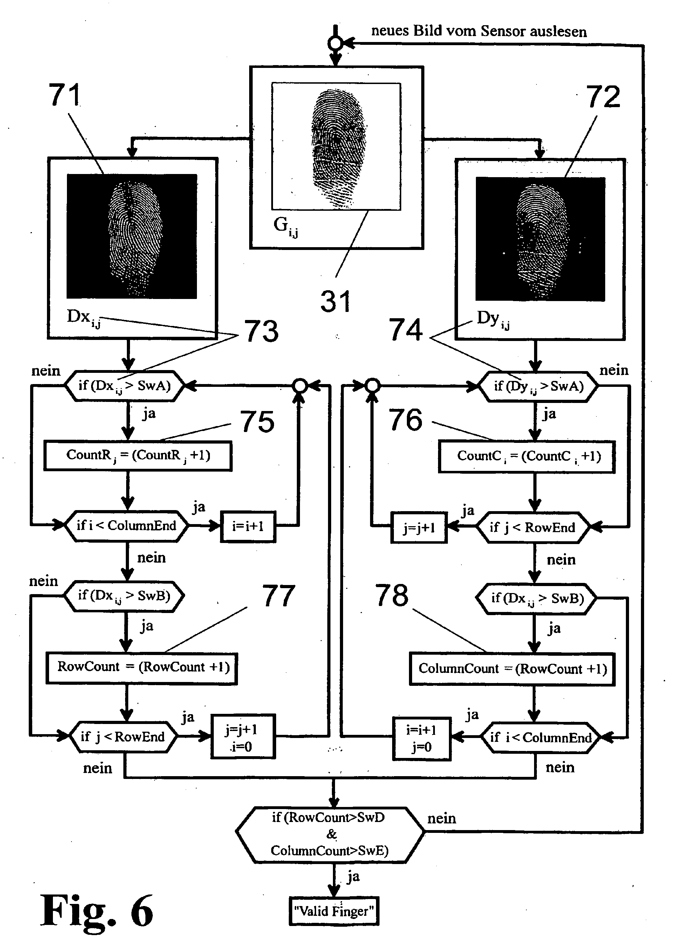

In **Fig.6** ist ein möglicher Programmablauf zur Erkennung eines "gültigen Fingerabdrucks" dargestellt, wobei sich dieser Programmablauf jeweils auf ein einzelnes Bild 31 innerhalb einer Bildfolge bezieht. Aus jedem elektronisch gewandelten Bild 31, das eine Grauwertverteilung $G_{i,j}$ hat, werden ein Gradientenbild 71 in x-Richtung mit den Werten $Dx_{i,j}$ und ein Gradientenbild 72 in y-Richtung mit $Dy_{i,j}$ gebildet, indem in jeder Zeile bzw. jeder Spalte Differenzen 73 bzw. 74 aus den aufgenommenen benachbarten Grauwertpixeln gebildet werden. Dabei besteht die Möglichkeit, für jedes aktuell zu generierende Pixel des Gradientenbildes 71 innerhalb der Zeilen die Differenz 73 aus direktem Vorgängerpixel und direktem Nachfolgerpixel des zugehörigen Grauwertpixel im Bild 31 oder - um die Empfindlichkeit zu verbessern - aus dem Vorvorgänger- und dem Nachnachfolgerpixel zu bilden. Entsprechendes ist für die Differenzen 74 in Spaltenrichtung vorzunehmen.

In den so erzeugten Gradientenbildern 71 und 72 wird nach Differenzwerten 73 und 74 gesucht, die eine bestimmte Grauwertschwelle SwA überschreiten. Die Grauwertschwelle SwA definiert eine Differenzwertgröße, ab der ein aus Vorgänger- und Nachfolger-Grauwertpixeln gebildeter Differenzwert 73 bzw. 74 als "gültig" zählt. Diese Grauwertschwelle SwA muss nicht fest definiert sein, sondern kann auch variabel sein (sich von Bild zu Bild ändern) und sich damit besser an die Bildqualität des eingegangenen Bildes 31 anpassen.

Ist die Differenz "gültig", werden eine im Differenzenzähler 75 für die Zeilen des x-Gradientenbildes 71 definierte Variable $CountR_j$ bzw. eine im Differenzenzähler 76 für die Spalten des γ-Gradientenbildes 72 definierte Variable $CountC_i$ jeweils um Eins höher gezählt.

Die Überprüfung des Kriteriums und das Hochzählen der Differenzenzähler 75 und 76 wird solange durchgeführt, bis das Ende der Spalte bzw. Zeile erreicht ist. Danach wird überprüft, ob der jeweilige Zählwert in den Differenzenzählern 75 und 76 eine Mindestschwelle übersteigt. Dabei werden die Zeilen bzw. Spalten, deren Anzahl von im Differenzzähler 75 bzw. 76 ermittelten "gültigen" Differenzwerten 73 bzw. 74 jeweils eine Schwelle SwB bzw. SwC überschreiten und somit "gültige" Zeilen bzw. Spalten darstellen, in einem Zeilenzähler 77 für alle gültigen Zeilen (RowCount) bzw. in einem Spaltenzähler 78 für alle gültigen Spalten (ColumnCount) aufsummiert.

Die Schwellen SwB und SwC können durchaus dieselbe Größe haben, müssen sie aber nicht. Während eines Abrollvorgangs des Fingers 1 in Zeilenrichtung der Bildaufnahmeeinheit 2 variiert die Anzahl der "gültigen" Differenzen 73 je Bild 31 in Zeilenrichtung stark. Bei Beginn und Ende eines Abrollvorgangs ist diese Anzahl ungefähr um den Faktor zwei kleiner als im Mittelteil des Abrollvorgangs. Die Anzahl der "gültigen" Differenzen 74 in Spaltenrichtung ist dagegen während des Abrollvorgangs relativ konstant und befindet sich in der gleichen Größenordnung wie die Anzahl der "gültigen" Differenzen 73 in Zeilenrichtung während Mittelteils des Abrollvorgangs. Deshalb kann die Schwelle SwC größer als die Schwelle SwB gewählt werden. Im vorliegenden Beispiel wurden beide Schwellen SwC und SwB gleich groß gewählt, um empfindlicher für das Auflegen eines Fingers 1 zu sein.

Wurden alle Zeilen und Spalten der Gradientenbilder 71 und 72 die "gültigen Zeilen bzw. Spalten untersucht und im Zeilenzähler 77 bzw. Spaltenzähler 78 aufsummiert, wird verglichen, ob der Zählwert des Spaltenzählers 77 für die gültigen Spalten (ColumnCount) und der des Zeilenzählers 78 für die gültigen Zeilen (RowCount) eine Schwelle SwD bzw. SwE überschritten haben. Bei diesem Vergleich werden für die Schwellen SwD und SwE die gleichen Größen gewählt, um die Überprüfung empfindlicher zu machen. Rein formal kann aber in Analogie zu den Schwellen SwB und SwC die Schwelle SwE größer gewählt werden als die Schwelle SwD. Die Entscheidung, ob ein "gültiger Finger" vorliegt, kann auch darauf beschränkt werden, dass nur einer von Zeilenzähler 77 und Spaltenzähler 78 die Schwelle SwD bzw. SwE überschreitet. Dazu ist beim Abrollen des Fingers 1 in Zeilenrichtung z.B. der Spaltenzähler 78 am besten geeignet. Überschreiten die Ausgangswerte des Zeilenzählers 77 und/oder des Spaltenzählers 78 den Schwellwert SwD bzw. SwE, so liegt ein "gültiger Finger" auf der Aufnahmefläche 21 auf und die Bewegungsverfolgung 62 kann eingeleitet werden.

Bewegungsverfolgung 62 (MT-Routine)

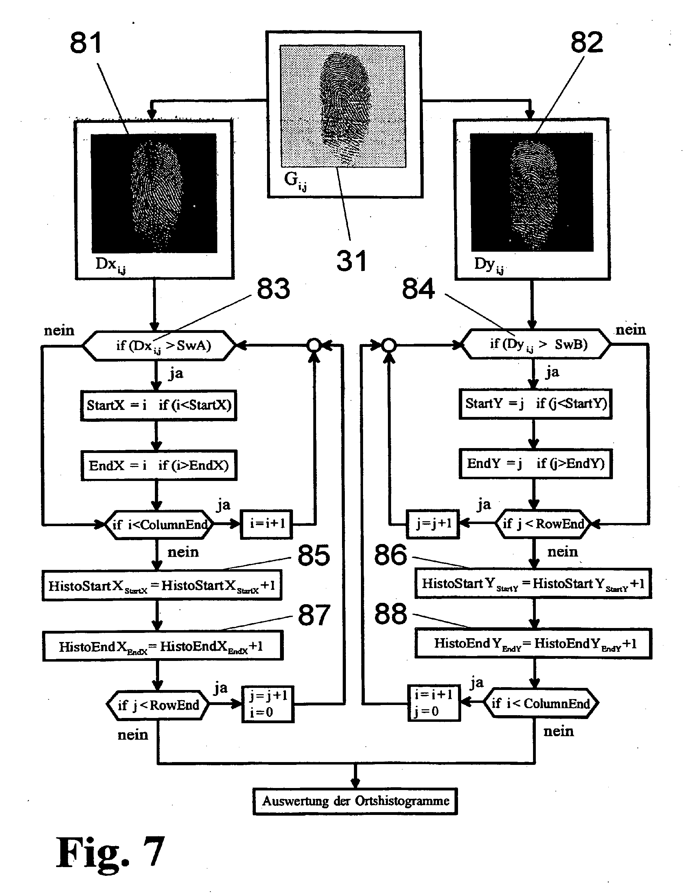

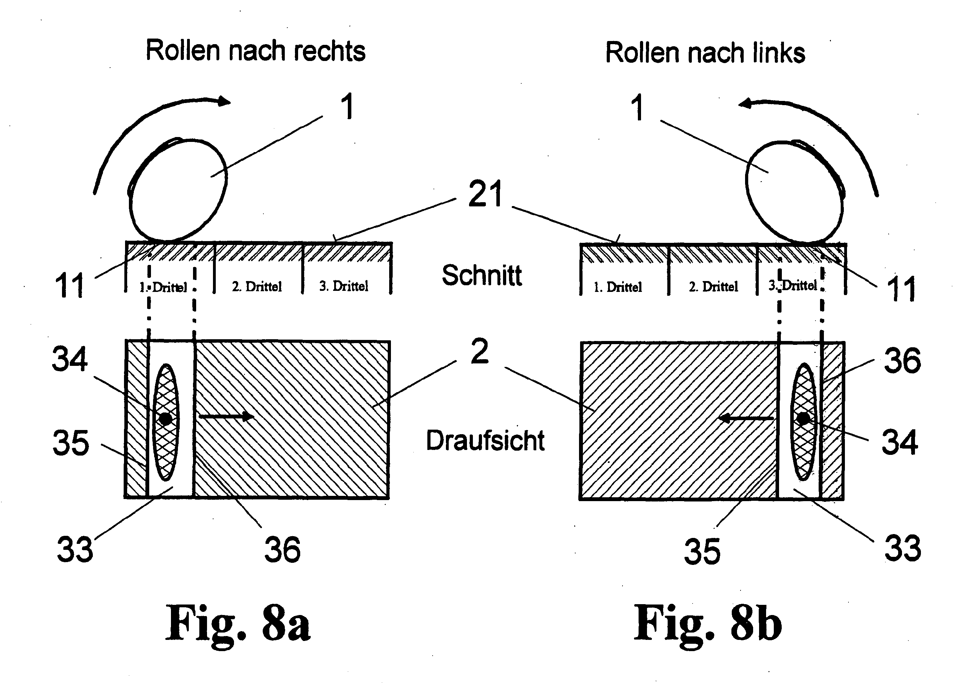

Die MT-Routine 62, die in **Fig. 7** schematisch dargestellt ist, dient der Verfolgung der aufgrund einer Rollbewegung des Fingers 1 sukzessive geänderten Position des aktuellen Fingerabdrucks 11 (Abdruckfläche).
Der Anfangspunkt für das Bewerten durch die MT-Routine 62 kann auch durch einen Schalter im Bedienfeld, einen Fußschalter oder ein externes Gerät (z.B. Recheneinheit 4) vorgegeben werden.
Beim ersten Durchlauf der MT-Routine 62 hat das aus der Bildaufnahmeeinheit 2 ausgelesene Bild 31 die Größe der gesamten aktiven Fläche des Sensors 22 und ist somit ein Vollbild. In den danach folgenden Durchläufen wird - abhängig von der berechneten Bereichsgröße - nur ein ausgewählter aktiver Pixelbereich 23 des Sensors 22 ausgelesen, so dass das ausgelesene Bild 31, auf die gesamte Sensorfläche bezogen, ein Teilbild darstellt.
Die MT-Routine 62, deren Funktion anhand der **Fig. 7** und der schematischen Darstellungen von **Fig. 8** erläutert werden soll, dient der Verfolgung des bewegten Fingers 1 zur Vorbereitung seines definierten Abrollens, nachdem dieser als "gültiger Finger" erkannt wurde. Dabei wird die Position und Größe eines informationsrelevanten Ausschnitts des Bildes 31 für jedes nachfolgend aus der Bildaufnahmeeinheit 2 auszulesende angepasste Bild 31 neu berechnet und als auszulesender Pixelsektor 23 des Sensors 22 festgelegt.
Bei der MT-Routine 62 - wie in **Fig. 7** als Ablaufschema dargestellt - werden aus jedem Bild 31, das eine Grauwertverteilung $G_{i,j}$ aufweist, ein Gradientenbild 81 in x-Richtung mit Grauwerten $Dx_{i,j}$ und ein Gradientenbild 82 in y-Richtung mit $Dy_{i,j}$ berechnet oder die Gradientenbilder 71 und 72 aus der PR-Routine 61 direkt übernommen. Die Differenzwerte werden - wie in der PR-Routine 61 - aus einer Pixelumgebung gebildet (z.B. Differenz aus Vorgänger des Vorgängers und Nachfolger des Nachfolgers des zu bestimmenden Pixels).
In diesen Gradientenbildern 81 und 82 wird nach "gültigen" Differenzwerten 83 und 84 gesucht, die eine bestimmte Grauwertschwelle SwA überschreiten. Die Grauwertschwelle SwA ist wie in der PR-Routine 61 definiert.
In jeder Zeile bzw. Spalte wird von diesen "gültigen Differenzwerten 83 und 84 der erste und der letzte gültige Differenzwert 83 bzw. 84 ermittelt und als StartX bzw. StartY und EndX bzw. EndY zwischengespeichert. Ist das Ende der Zeile bzw. Spalte erreicht, werden die Start- und Endwerte dazu verwendet, jeweils in einem Ortshistogramm 85 bzw. 86 an der Pixelposition des Startwertes StartX bzw. StartY und in einem Ortshistogramm 87 bzw. 88 Pixelposition des Endwertes EndX bzw. EndY den dortigen Wert gemäß der im Histogrammfeld von **Fig. 7** angegebenen Formel um Eins höher zu zählen.
Wenn z.B. als Startwert für die Zeile (aus dem x-Gradientenbild 81) die Pixelnummer 312 des Bildes 31 ermittelt wurde, wird in dem Startwert-Histogramm 87 (HistoStartX) an der Stelle 312 der dortige Wert um Eins höher gezählt.
Sind alle Histogramme (Startwert-Histogramme 85 bzw. 86 und Endwert-Histogramme 87 bzw. 88) bestimmt, das Zeilenende für das Bestimmen in x-Richtung sowie das Spaltenende für das Bestimmen in y-Richtung erreicht, werden die Histogramme 85 bis 88 ausgewertet.
Um aus den vier Histogrammen 85 bis 88 die gültigen Start- und Endwerte zu finden, gibt es mehrere Möglichkeiten:

1. Die Mittelwerte aller im jeweiligen Histogramm vorkommenden Werte;
2. Die Medianwerte (alle Werte der Häufigkeit nach geordnet und dann der mittlere) aller im jeweiligen Histogramm vorkommenden Werte;
3. Schwerpunkt, z.B. Flächenschwerpunkt (Quotient aus der Summe aller Produkte von Häufigkeiten $H_i$ mit ihren Positionen i und der Summe aller Häufigkeiten)

$$W = \frac{\sum_i H_i \cdot i}{\sum_i H_i} \; ;$$

4. Minimale (bei Startwerten) bzw. maximale (bei Endwerten) Position, an der sich ein gültiger Wert in der Zeile bzw. Spalte des Histogramms befindet;

5. Minimale (bei Startwerten) bzw. maximale (bei Endwerten) Position im Histogramm, an der ein gültiger Wert eine Schwelle überschreitet;

6. Position des am häufigsten auftretenden Wertes im Histogramm;

7. Position, ab der eine Mindestanzahl von gültigen Werten im Histogramm erreicht wurde;

8. Position im Histogramm, ab der eine Mindestanzahl von gültigen Werten eine Schwelle überschreitet;

9. Position, ab der, beginnend vom ersten Auftreten eines gültigen Wertes, das Integral der Häufigkeitsverteilungskurve prozentual eine bestimmte Schwelle überschritten hat.

(Bei den Methoden 4 bis 9, bei denen die Positionen der gültigen Start- bzw. Endwerte ausgezählt werden, wird jeweils bei den Startwerten von der Nullposition aufwärts, bei den Endwerten von der Maximalposition abwärts gezählt.)

Die von den oben genannten ausgewählte Methode wird zur Reduzierung des Rechenaufwandes zweckmäßig nur auf einen Teil der Spalten bzw. Zeilen jedes Bildes 31 angewandt, um so die Rechenzeit gering zu halten.

Die daraus ermittelten Start- und Endwerte bilden die Grenzen einer vorzugsweise rechteckigen umschließenden Figur 32, die den Fingerabdruck 11 vollständig beinhaltet. Es sind aber auch Ellipsen oder ähnliche ebene Figuren als umschließende Figur 32 sinnvoll.

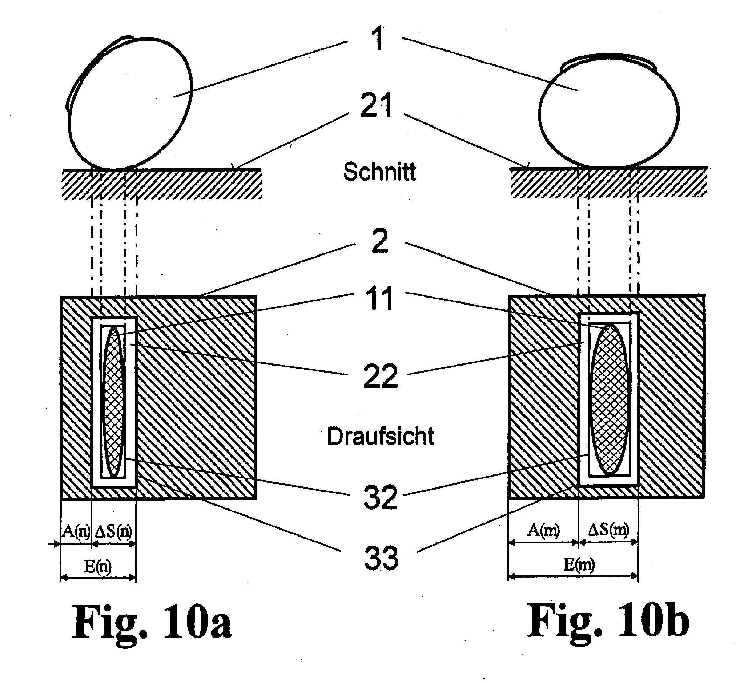

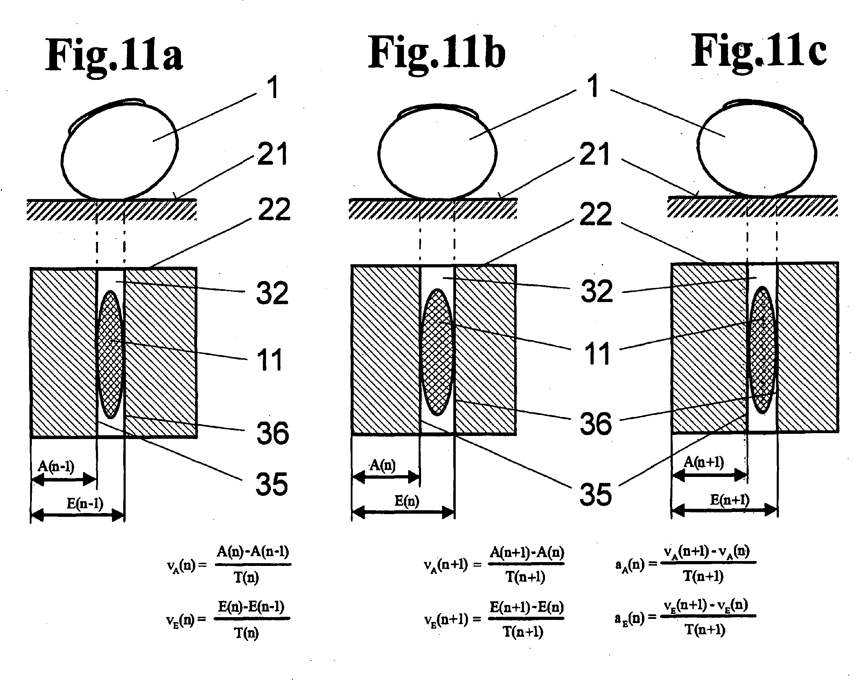

Die umschließende Figur 32, wie sie in rechteckiger Form in Fig. 10a und 10b dargestellt ist, kann auch auf die Festlegung einer linken Startgrenze 35 (StartX) und einer rechten Endgrenze 36 (EndX), wie in Fig. 11a bis 11c angedeutet beschränkt werden, falls sich die Berechnung der umschließenden Figur 32 aus Gründen der nahezu vollständigen Ausnutzung der Aufnahmefläche 21 lateral zur Rollrichtung des Fingers 1 nicht lohnt.

Um sicher zugehen, dass der Fingerabdruck 11 in keinem Fall beschnitten wird, müsste man die obige Methode Nr. 4 verwenden. Dies hätte aber den Nachteil, dass kleine Störungen auf der Aufnahmefläche 21 zu einem zu großen Rechteck 33 führen und damit die Auslesegeschwindigkeit begrenzt wird.

In Verbindung mit einer optoelektronischen Bildaufnahmeeinheit 2 gemäß Fig. 5 hat sich obige Methode Nr. 9 als besonders vorteilhaft herausgestellt. Um dabei eine Beschneidung des Fingerabdrucks 11 weitestgehend auszuschließen, wird ein Toleranzbereich eingeführt, der von den gefundenen Startwerten abgezogen und zu den Endwerte addiert wird. Derselbe Toleranzbereich kann später beim Zusammensetzen der Bilder 31 (von den Bildrändern abgezogen) einen Grenzbereich bilden, in dem keine Berechnungen vorgenommen werden, um Randprobleme des Ausschneidens zu vermeiden.

Der Toleranzbereich sollte so gewählt werden, dass sich der abrollende Finger 1 bei beibehaltenem Rechteck 33 auch noch drei Bilder 31 später im Rechteck 33 befindet, ohne dass er beschnitten wird.

Wenn z.B. der Sensor 22 einer Kamera 26 mit 20 B/s ausgelesen wird und ein normaler Abrollvorgang 2s dauert, so werden in dieser Zeit 40 Bilder aufgenommen. Angenommen die StartX-Linie, die in Fig. 8a und 8b die (linke) Startgrenze 35 des Rechtecks 33 darstellt, bewegt sich in dieser Zeit um 400 Pixel, so bewegt sie sich, vorausgesetzt es ist eine gleichförmige Bewegung (keine Beschleunigung), zwischen zwei aufeinanderfolgenden Bildern 31 um 10 Pixel. Will man, dass auch drei Bilder 31 weiter, der Finger 1 sich in diesem Rechteck 33 befindet, dann muss der Toleranzbereich mindestens 30 Pixel groß sein! Dieser Toleranzbereich garantiert, dass sich der Finger 1 - egal in welche Richtung er abgerollt wird - in jedem Fall in diesem Rechteck 33 befinden wird.

Ein zweiter Aspekt bei der Berechnung des Toleranzbereiches ist die Veränderung der Auslesegeschwindigkeit bei unterschiedlicher Größe des Rechtecks 33. Falls sich beim verwendeten Sensor 22 (wie z.B. LM9638 von National Semiconductors, Inc., US, mit sogenanntem "Windowing") durch Festlegung eines aktiven Pixelbereichs 23 die Auslesegeschwindigkeit erhöhen lässt, ist es sinnvoll, auch den Toleranzbereich zu verändern.

Ein solcher Sensor 22, wie im obigen Beispiel erwähnt, der bei Komplettauslesung seiner aktiven Fläche ca. 20 Bilder/s auslesen kann und bei dem die Startgrenze 35 (linke Grenze = StartX-Linie des aktiven Pixelbereichs 23) von Bild zu Bild um 10 Pixel wandert, könnte bei einer Beschränkung der Größe des aktiven Pixelbereichs 23 z.B. auf die Hälfte der aktiven Sensorfläche 40 Bilder pro Sekunde auslesen und bei Beschränkung auf ein Drittel der aktiven Sensorfläche eine Bildrate von 66 B/s realisieren. Damit wandert die Linie statt 10 Pixel/Bild um 5 bzw. 3,33 Pixel/Bild und der Toleranzbereich kann auf 15 bzw. 10 Pixel beschränkt werden.

Zur Bewegungsverfolgung in der MT-Routine 62 kann auch mit einer festen Rechteckgröße gearbeitet werden, wenn dass Rechteck 33 so groß ist, dass immer ein Fingerabdruck 11 hineinpasst und gesichert ist, dass dies auch mindestens im nächsten Bild 31, vorgegeben durch den aktiven Pixelbereich 23, der Fall ist. Positioniert werden kann das Rechteck 33 auf zwei Arten:

- Um den Schwerpunkt (vorzugsweise Flächenschwerpunkt) des Fingerabdrucks 11, in den der Mittelpunkt des Rechtecks 33 mit fester Größe gelegt wird.
- Durch Berechnung der Start- und Endwerte der umschließenden Figur 32 nach einer der neun oben beschriebenen Methoden und Positionieren des festen Rechtecks 33 um diese Grenzen, indem die Mitte des festen Rechtecks 33 auf den errechneten Mittelwert aus Start- und Endwerten gesetzt wird.

Sind die Grenzen des Rechtecks 33 mit Toleranzbereich bestimmt, werden die gefundenen Werte in das Register des Sensors 22 der Bildaufnahmeeinheit 2 eingetragen, der dann beim Auslesen des nächsten Bildes 31 nur diesen Bereich aufnimmt und wiedergibt.

Abrollstarterkennung 63 (RSR-Routine 63)

Nachdem der MT-Routine 62 das aktuelle Bild 31 bewertet und die neue Größe der Figur 32 bestimmt hat, werden durch den Ablauf der RSR-Routine 63 die Positionen der Figur 32 mit denen der Figuren 32 vorangegangener Bilder 31 verglichen.

In **Fig. 8a** und **Fig. 8b** ist jeweils stilisiert ein Abrollvorgang nach rechts und nach links dargestellt. In der Schnittdarstellung oben ist zu sehen, dass man die Aufnahmefläche 21 sinnvoll in drei Drittel einteilt, um den Finger 1 so richtig zu positionieren, damit man den Fingerabdruck 11 komplett abgerollt auf die Aufnahmefläche 21 bekommt. Dazu soll der Finger 1 vorzugsweise im zweiten Drittel aufgelegt und in das erste oder dritte Drittel gerollt werden. Hierbei wird bereits eine Rollbewegung durchgeführt, wodurch sich der Schwerpunkt 34 und die Grenzen 35 und 36 (StartX und EndX) des Rechtecks 33 verändern.

Wenn das Ziel ist, einen Abrollvorgang z.B. von links nach rechts durchzuführen, so wird der Finger 1 in der Mitte der Auflagefläche 21 auf das zweite Drittel gelegt und nach links zu einem Startpunkt für den kompletten Abrollvorgang gerollt. Dabei werden der Schwerpunkt, die (linke) Startgrenze 35 und (rechte) Endgrenze 36 des Rechtecks 33 ebenfalls nach links bewegt. Ist der Startpunkt im ersten Drittel der Auflagefläche 21 erreicht, kann der Abrollvorgang gestartet werden, indem der Finger 1 nach rechts gerollt wird. Als Startpunkt eines Abrollvorganges wird dabei vorzugsweise die geänderte Bewegungsrichtung der (rechten) Endgrenze 36 detektiert und der Eintritt dieses Ereignisses allen Systemkomponenten, die diese Information benötigen, mitgeteilt.

Die Detektion des Startpunktes kann auch über die Schwerpunktsverlagerung ermittelt werden oder als Kombination aus der Bewegungsumkehr von Endgrenze 36 und Schwerpunkt 34. Bei Letzterem dienen als Indikatoren die Veränderung sowohl der Richtung des Verlagerns des Schwerpunktes 34 als auch der Richtung des Verlagerns der Endgrenze 36 (EndX-Linie) des Rechtecks 33. Diese Variante ist robuster als die ersten beiden.

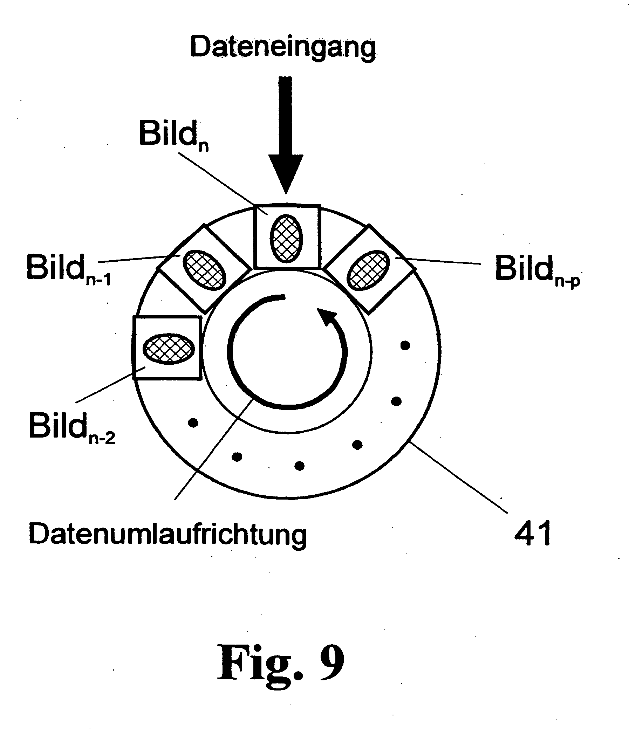

Um die Robustheit des Verfahrens zu erhöhen, ist es weiterhin möglich, die Entscheidung, ob gerade ein Abrollvorgang stattfindet oder nicht, erst nach einer definierten (größeren) Anzahl von Bildern 31 zu fällen, wenn sich deren Schwerpunkte 34 und/oder Endgrenzen 36 (rechte Rechteckgrenzen) über diese Bildanzahl hinweg monoton in dieselbe, der Anfangsrichtung entgegengesetzte Richtung bewegt haben. Dies bedeutet aber, dass man zur Verarbeitung der ausgelesenen Bilder 31 eine Art Ringpufferspeicher 41 benötigt (siehe **Fig. 9**), in dem alle Bilder 31, die ab dem eigentlichen Startpunkt des Abrollvorgangs bis zu dem Bild 31, ab dem der Startpunkt festgestellt wird, zwischengespeichert werden.

Es muss also mindestens eine Anzahl p von Bildern 31 in den Ringpufferspeicher 41 passen, wie zur Feststellung des Beginns des Abrollvorganges benötigt werden.

Ist der Startpunkt festgestellt, werden zuerst alle Bilder 31 aus dem Ringpufferspeicher 41 ausgelesen und zur Verarbeitung weitergeleitet.

Für den Fall, dass nach links abgerollt werden soll, verhält sich alles genauso, nur dass nicht die rechte, sondern die Startgrenze 35 (linke Grenze des Rechtecks 33) zur Betrachtung verwendet wird.

Hat der Abrollvorgang nach einem der obigen Kriterien begonnen, so wird dies der mit der Bildaufnahmeeinheit 2 über die Verarbeitungseinheit 5 verbundenen externen Recheneinheit 4 (z.B. ein PC) signalisiert. Der Recheneinheit 4 wird außerdem mitgeteilt, wie viele Bilder 31 für das Feststellen des Abrollvorganges verwendet wurden, damit er diese aus einem Pufferspeicher, in dem die bereits für die Einstellung des aktiven Pixelbereichs 23 der Bildaufnahmeeinheit 2 verwendeten Bilder 31 zwischengespeichert werden, mit für das Zusammensetzen des Gesamtbildes 3 verwendet. Zu diesem Zweck ist entweder in der Verarbeitungseinheit 5, die als Steuerungshardware ausgebildet ist, oder in der externen Recheneinheit 4 ein Ringpufferspeicher 41 gemäß **Fig. 9** vorhanden, in dem die für den RSR-Routine 63 benötigten Bilder 31 zwischengespeichert werden. Das bedeutet, die Anzahl der Speicherplätze im Pufferspeicher 41 muss um Eins größer sein, als die Anzahl der Bilder 31, die zur Bestimmung des Abrollstarts verwendet werden.

Ist ein Startpunkt eines Abrollvorganges detektiert worden, wird Schleife 2 in **Fig. 1** beendet und in die Schleife 3 übergegangen. Diese beginnt wieder mit einem Auflagetest (siehe PR-Routine 61), um bei unverhofftem Abheben des Fingers 1 die Aufnahme des Abrollvorgangs zu beenden. Ist weiterhin ein gültiger Fingerabdruck 11 vorhanden, wird zur Abrollverfolgung gewechselt.

Abrollverfolgung 64 (RT-Routine 64)

Die RT-Routine 64 dient der Verfolgung des Fingers 1 während des definierten Abrollens. Sie bestimmt nicht nur den Schwerpunkt 34 und die Grenzen 35 und 36 des Fingerabdrucks 11 wie die Bewegungsverfolgung 62, sondern bestimmt auch die Geschwindigkeit des Abrollvorgangs, indem die Geschwindigkeit des Schwerpunkts 34 und/oder die Geschwindigkeit der jeweiligen Grenzen 35 und 36 des Rechtecks 33 separat berechnet werden. Außerdem wird die Beschleunigung des Fingerschwerpunkts 34 und/oder der jeweiligen Rechteckgrenzen 35 und 36 ermittelt, um kurzfristige Änderungen der Abrollgeschwindigkeit zu detektieren.

Da somit die Geschwindigkeiten und Beschleunigungen des Abrollvorgangs bekannt sind und während des Abrollvorgangs die Rollrichtung unverändert bleibt, kann die Toleranz zwischen der umschließenden Figur 32 des Fingerabdrucks 11 und den Grenzen 35 und 36 des vergrößerten Rechtecks 33 im Gegensatz zum MT-Algorithmus 62 kleiner gewählt werden.

Sollte sich die Richtung des Abrollens über mehrere Bilder 31 hinweg ändern oder bei einem Bild 31 der Finger 1 abgehoben sein, so wird dies durch den RER-Algorithmus 65 oder den PR-Algorithmus 61 detektiert und als Abrollschluss interpretiert.

Bei einem Abrollvorgang wird der Finger 1 über eine Auflagefläche 21 rollend bewegt, auf der der dort entstandene Fingerabdruck 11, egal nach welchem physikalischen Prinzip, zu verschiedenen Zeitpunkten aufgenommen wird. Durch die Form und Elastizität des Fingers 1 variiert die Breite und Höhe des Fingerabdrucks 11.

Dazu zeigen **Fig. 10a** und **Fig. 10b** zwei zu verschiedenen nicht direkt aufeinanderfolgenden Zeitpunkten aufgenommene Fingerabdrücke 11, bei denen erkennbar ist, dass die Breite der Fingerabdrücke 11 unterschiedlich ist und sich somit auch die umschließende Figur 32 von der Breite $\Delta S(n) = E(n) - A(n)$ zu $\Delta S(m) = E(m) -$ A(m) ändert. Verringert sich die Breite der Figur 32 um den Fingerabdruck 11, kann die Bildrate der Bildaufnahmeeinheit 2 infolge seines schmaler eingestellten aktiven Pixelbereichs 23 erhöht werden.

Für die MT-Routine 62 wurde bereits erklärt, wie man gültige Start- und Endwerte findet, indem eine feste Toleranzzugabe vom Startwert abgezogen und zum Endwert addiert wurde. Die Größe des Toleranzbereiches orientiert sich in der MT-Routine 62 an der maximal auftretenden Geschwindigkeit des Abrollvorgangs und ist somit fest definiert. Dies hat zur Folge, dass der Toleranzbereich relativ groß gewählt werden muss und somit Bildauslesezeit vergeudet wird. Bei der MT-Routine 62 ist das nicht problematisch, da der aufgenommene Fingerabdruck 11 lediglich zum Visualisieren verwendet wird. Bei einem Abrollvorgang ist es jedoch notwendig, so viele Bilder 31 pro Sekunde wie irgend möglich auszulesen, da jede Erhöhung der Auslesegeschwindigkeit, eine Verbesserung des richtigen Zusammensetzens des Gesamtbildes 3 bewirkt. Deshalb kann mit a priori Wissen über den begonnenen Abrollvorgang die Auslesezeit deutlich verringert werden.

Erstens ist durch die Abrollstarterkennung 63 bekannt, in welche Richtung abgerollt wird, d.h. der Toleranzbereich muss nur in eine Richtung den maximalen Wert besitzen. Zweitens können durch die gleichbleibende Richtung des Abrollens die Geschwindigkeit und eventuell auftretende Beschleunigungen berechnet werden und dadurch eine genauere Vorhersage der Grenzen der den Fingerabdruck 11 umschließenden Figur 32 und somit des erforderlichen Rechtecks 33 gemacht werden. Der Ablauf zur Bestimmung der Geschwindigkeit ist in **Fig. 11a bis 11c** dargestellt. Beim Abrollen in x-Richtung sind vornehmlich drei Geschwindigkeiten interessant, die Geschwindigkeit des Schwerpunktes in x-Richtung (z.B. Flächenschwerpunkt des Abdrucks, Schwerpunkt berechnet als Differenz der Grenzen 35 und 36 der umschließenden Figur 32 in x-Richtung) und die Geschwindigkeiten der beiden Grenzen in x-Richtung. Für die Geschwindigkeiten in y-Richtungen gilt dies analog, wenn ein Abrollen in y-Richtung implementiert wird. Die Geschwindigkeiten berechnen sich jeweils aus den zurückgelegten Wegstrecken und der Zykluszeit (maximal mögliche Integrationszeit). Physikalisch ist die Geschwindigkeit definiert mit:

$$v = \frac{ds}{dt} \approx \frac{\Delta s}{\Delta t} \qquad\qquad (1)$$

$\Delta$s ist die zurückgelegte Wegstrecke z.B. der Startgrenze der umschließenden Figur 32 berechnet durch:

$$\Delta s(n) = A(n) - A(n-1) \qquad\qquad (2)$$

Der Index n beschreibt einen beliebigen Zeitpunkt der Aufnahme eines Bildes 31 im Wertebereich von $0 \leq n \leq N-1$, mit N als Gesamtanzahl aller aufgenommenen Bilder 31. Damit ist $n-1$ der Zeitpunkt des Vorgängers und $n+1$ der des Nachfolgers. $\Delta$t stellt bei der Verwendung von CCD- und CMOS-Sensoren die Zykluszeit dar, also die Zeit, die benötigt wird, den aktiven Pixelbereich 23 und somit ein beschränktes Bild 31 auszulesen.

Sensoren ohne die Möglichkeit, die Auslesegeschwindigkeit in Abhängigkeit von der Bildgröße zu steuern, haben eine konstante Zykluszeit, die sich auf das Auslesen kompletter Bilder bezieht und man kann hierbei zur Vereinfachung der Berechnung auf die Division durch $\Delta$t verzichten (Einsparung einer Division). Bei Sensoren, wie der LM9638 von National Semiconductors, Inc. (US), bei denen in Abhängigkeit von der verwendeten Größe des aktiven Pixelbereichs 23 die Zykluszeit geändert werden kann, errechnet sich die Zykluszeit wie folgt:

$$\Delta t = T(n) = T_{Integration} = \frac{N_{Rows} \cdot (N_{Column} + R_{opcycle} + R_{ltime})}{f_{PixelClock}} \tag{3}$$

Hierbei ist $f_{PixelClock}$ der Pixeltakt zwischen 12 bis 27 MHz des Sensors 22. Mit diesem Pixeltakt werden die einzelnen Pixel ausgelesen. $N_{Rows}$ und $N_{Column}$ sind die Anzahl der benötigten Zeilen und Spalten im aktiven Pixelbereich 23 des Sensors 22. $R_{opcycle}$ ist ein fester Integerwert von 140. Dies ist die Zeit, die zum Ausführen aller Zwischenschritte vor und nach dem Auslesen einer Zeile des Sensors 22 benötigt wird.
Bei der Auslesung von adaptierten Rechtecken 33 als jeweils aktiver Pixelbereich 23 ("Window of Interest") hat $R_{ltime}$ einen festen Integerwert von 34, sonst ist $R_{ltime}$ Null.
Damit ergibt sich z.B. bei einer Pixelfrequenz von 25 MHz und einem kompletten Auslesen des Sensors 22 mit 1280 x 1024 Pixel eine Bildrate von 16,8 Bilder pro Sekunde. Läuft gerade die RT-Routine 64 ab, so reduziert sich damit die Breite des Bildes 31 z.B. auf die Hälfte (640 x 1024 Pixel) und man erreicht eine Bildrate von 30 B/s (Bildern pro Sekunde). Eine weitere physikalische Größe zur Berechnung der Vorhersage der nächsten Grenze 35 bzw. 36 des Rechtecks 33 ist die Beschleunigung. Sie berücksichtigt bei der Berechnung jegliche Geschwindigkeitsänderung. Die Beschleunigung wird wie folgt berechnet:

$$a = \frac{dv}{dt} \approx \frac{\Delta v}{\Delta t} = \frac{v_A(n+1) - v_A(n)}{T(n+1)} \tag{4}$$

Die Beschleunigung wird aus den beiden vorangegangenen Geschwindigkeiten bestimmt, wodurch die erste Vorhersage ohne eine Beschleunigungsberechnung durchzuführen ist.
Empirische Untersuchungen an Abrollsequenzen haben ergeben, dass die Bewegung der Grenzen 35 und 36 der umschließenden Figur 32 (d.h. in Abrollrichtung: Anfang und Ende des Fingerabdrucks 11 in x-Richtung) bei konstanter Zykluszeit einer tanh-Funktion ähnelt und durch folgende Gleichung angenähert werden kann:

$$s_n = F\left[1 + \tanh\left(\pi \cdot \frac{n - \frac{N}{2}}{N}\right)\right] + Z \quad [Pixel] \tag{5}$$

Die Parameter F und Z dienen zum Angleichen der Funktion an einen realen Abrollvorgang und können durch die Betrachtung z.B. für den Startwert zum Zeitpunkt t = 0 und für den Startwert beim Beenden des Abrollvorgangs t = ∞ wie folgt berechnet werden:

$$F = \frac{Start_\infty - Start_0}{2 \cdot \tanh\left(\frac{\pi}{2}\right)}; \quad Z = Start_0 - F \cdot \left[1 + \tanh\left(-\frac{\pi}{2}\right)\right] \tag{6}$$

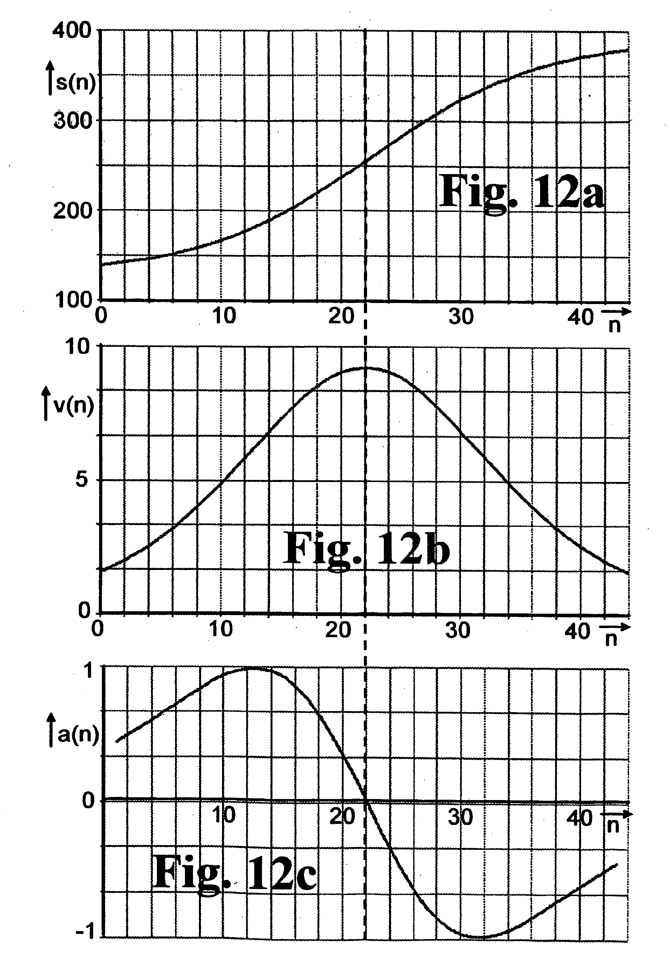

Für einen bestimmten Abrollvorgang haben sich z.B. die Werte $F = 132$ und $Z = 128$ ergeben. Damit erhält man einen Kurvenverlauf, wie er im **Fig. 12a** dargestellt ist. In **Fig. 12a** repräsentiert s(n) die "überrollten Pixel" des auf der Auflagefläche 21 der Bildaufnahmeeinheit 2 abrollenden Fingers 1. Es ist erkennbar, dass zwischen n = 18 bis n = 24 die größte Veränderung stattfindet.
Diese Veränderung spiegelt sich auch in **Fig. 12b** wider, in der die Geschwindigkeiten des Abrollvorganges dargestellt sind. Durch die konstante Zykluszeit wurde auf die Division durch die Zeit verzichtet. Dadurch stellt v(n) die Pixelveränderung zum jeweiligen Zeitpunkt dar (wie viele Pixel bis zum nächsten Bild 31 überrollt werden). Bei n = 22 ist die maximale Geschwindigkeit erreicht (9,2 Pixel/Bild), d.h. in der Mitte des Abrollens ist die Geschwindigkeit am größten. Deshalb ist es in diesem Bereich besonders wichtig, die Bildaufnahmeeinheit 2 so schnell wie möglich auszulesen.

In **Fig. 12c** ist die Beschleunigung des Abrollvorganges eingetragen. Auch hier wurde auf die Division durch die Zykluszeit verzichtet, da diese konstant gewählt wurde. Dadurch repräsentiert a(n) die Abweichung der Pixelveränderung zwischen zwei aufeinanderfolgender Bildern 31. Da die Beschleunigung a(n) die Ableitung von v(n) ist, ist der Wert von a(n) beim Maximum von v(n = 22) gleich "Null". Die Funktion a(n) hat auch zwei Extremwerte (0,5 bzw. -0,5 Pixel/Bild) bei n = 13 und bei n = 31. An diesen beiden Stellen ist die Veränderung der Geschwindigkeit zwischen zwei ausgelesenen Bildern 31 am größten, d.h. die Möglichkeit einer Fehlberechnung ist an diesen Stellen am größten, wodurch auf zusätzliche Toleranzzugaben $\Delta$ zur Erweiterung des Rechtecks 33 zwecks Einstellung eines größeren aktiven Pixelbereichs 23 nicht verzichtet werden kann.

Nachfolgend wird eine Routine vorgestellt, die eine genauere Vorhersage der Grenzen 35 und 36 des Rechtecks 33 realisiert. Grundvoraussetzung ist, dass nach der bereits vorgestellten RT-Routine 64 die genauen Grenzen 35 und 36 des Fingerabdrucks 11 bzw. der ihn umschließenden Figur 32 bestimmt wurden und dass als Anfangsbedingungen zwei Annahmen gemacht werden.

Da zur Geschwindigkeitsbestimmung mindestens zwei Bilder 31 benötigt werden, muss eine Annahme getroffen werden, da sonst für die Bestimmung der Lage der Grenzen des zweiten Bildes 31 keine Vorhersage gemacht werden kann. Wenn ein Abrollvorgang durch die RSR-Routine 63 als begonnen erkannt wurde, wird deshalb angenommen, dass die Lage der Startgrenze 35 für das erste Bild 31 gleich der Lage der Startgrenze 35 für das zweite Bild 31 ist. Diese Annahme kann deshalb getroffen werden, da sich der Finger 1 beim Abrollen von der Startposition weg bewegt und somit sichergestellt ist, dass der Fingerabdruck 11 nicht beschnitten werden kann. Für die Lage der Endgrenze 36 im zweiten Bild 31 wird zur Lage der Endgrenze 36 aus dem ersten Bild 31 ein fester Wert dazu addiert, der sicherstellt, dass sich der Fingerabdruck 11 im zweiten Bild 31 noch vor der Endgrenze 36 befindet. Eine zweite Annahme ist für die Beschleunigungsvoraussage notwendig. Hierfür benötigt man mindestens drei Bilder 31, um eine Aussage zu treffen. Deshalb wird für das dritte aufzunehmende Bild 31 vorzugsweise angenommen, dass sich die Geschwindigkeit um den Faktor 2 vergrößert.

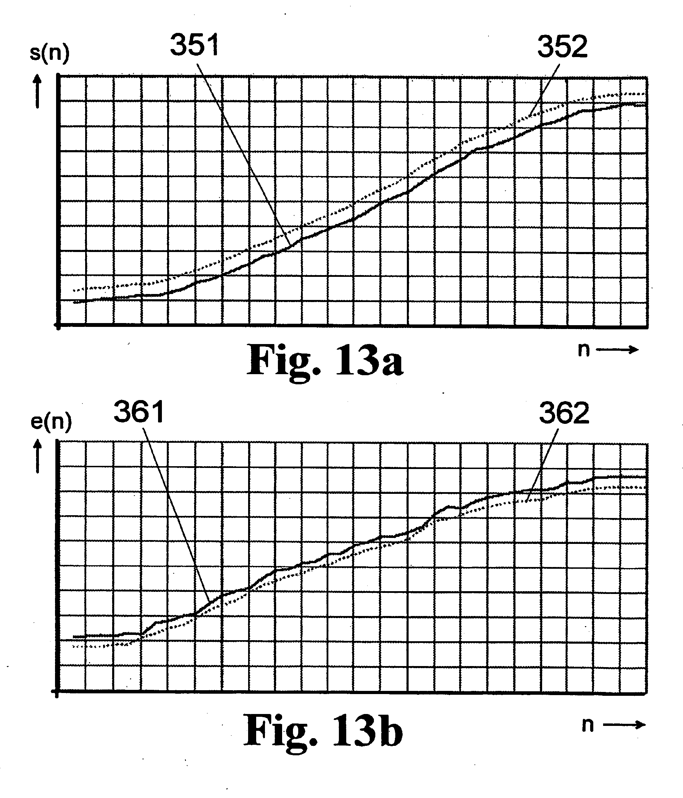

Nachfolgend soll eine Vorgehensweise erläutert werden, die eine genaue Vorhersage der nächsten Grenzen 35 und 36 des Rechtecks 33 realisiert. In **Fig. 13** sind die Ergebnisse des Verfahrens dargestellt, wobei s(n) die Bewegung der Lage der Startgrenze 35 und e(n) die Bewegung der Lage der Endgrenze 36 ist. Die Darstellungen der **Fig. 13a und 13b** repräsentieren eine Abrollbewegung von einem Ursprung bei Pixel 0 hin zum maximalen Wert der jeweiligen Bildaufnahmeeinheit 2.

In **Fig. 13a** ist die Bewegung der Lage der Startgrenze 35, wobei die durchgezogene Linie die vorhergesagte Position 351 der Startgrenze 35 des Rechtecks 33 und die gestrichelte Linie die tatsächliche erreichte Position 352 des abgebildeten Fingerabdrucks 11 darstellen. Bei der Bewegung der Startgrenze 35 darf die tatsächlich erreichte Position 352 nicht unterhalb der durchgezogenen Linie der berechneten Position 351 liegen, da sonst eine Bescheidung des Fingerabdrucks 11 stattfindet.

Bei der Bewegung der Lage der Endgrenze 36 gemäß **Fig. 13b** ist es umgekehrt, hier muss die berechnete Position 361 über der tatsächlich erreichten Position 362 liegen.

Bei einer Abrollbewegung in die entgegengesetzte Richtung, also von der maximal möglichen Position hin zum Pixel 0 des aktiven Pixelbereichs 23 der Bildaufnahmeeinheit 2, sind die Aussagen über die Bewegung der Lage der Startund Endgrenze 35 und 36 entsprechend gleich. Die Position 351 bzw. 361 der Startgrenze 35 bzw. Endgrenze 36 kann grundsätzlich mit folgender Gleichung vorausberechnet werden:

$$x'(n+1) = \frac{a_x(n)}{2} \cdot \Delta t^2 + v_x(n) \cdot \Delta t + x(n) \qquad (7)$$

Hierbei ist x'(n+1) entweder die zu berechnende Lage der Startgrenze s'(n+1) oder die der Endgrenze e'(n+1). Der Apostroph bedeutet hierbei, dass es sich um eine vorherzusagende Größe handelt, die nicht zur Berechnung des übernächsten Wertes verwendet wird. Die Größe $a_x(n)$ repräsentiert die Beschleunigung und $v_x(n)$ die Geschwindigkeit des Startwertes ($a_s$, $v_s$) bzw. des Endwertes ($a_E$, $v_E$) zum aktuellen Zeitpunkt. Die aktuelle Position wird durch x(n) repräsentiert.

Mit der obigen Gleichung (7) wird eine Position des nächsten Wertes der Grenzen der umschließenden Figur 32 unter der Annahme berechnet, dass sich Geschwindigkeit und Beschleunigung nicht ändern. Diese Annahme entspricht jedoch nicht der Realität, sondern die Änderung der Pixelposition beschreibt während eines Abrollvorgangs annähernd eine tanh-Funktion, wie bereits oben zu **Fig. 12a-c** beschrieben wurde. Deshalb müssen für die Vorhersage der genauen Position der Lage der Grenzen 35 und 36 des den Fingerabdruck 11 umgebenden Rechtecks 33 einige Sicherheitsvorkehrungen getroffen werden, die wiederum darin bestehen, eine Toleranz zu definieren, die die Grenzen des Fingerabdrucks 11 umgibt und dafür sorgt, dass sich der Fingerabdruck 11 stets innerhalb eines die Figur 32 umrahmenden vergrößerten Rechtecks 33 befindet.

Die hier zu wählende Toleranz ist kleiner als bei der MT-Routine 62, da die Richtung des Abrollens bekannt ist. Es erweist sich als sinnvoll, eine Risikoabschätzung durchzuführen, d.h. bei der Position des Startwerts (Grenze 35) wird eine Minimalwertabschätzung und bei der Position des Endwertes (Grenze 36) wird eine Maximalwertabschätzung zwischen der errechneten Position 351 bzw. 361 und der tatsächlich erreichten Position 352 bzw. 362 realisiert. Dadurch wird eine zusätzliche Sicherheit eingebaut.

Eine mögliche Formel für den Startwert und den Endwert (Grenzen 35 und 36) für ein Abrollen von der kleineren Pixelposition hin zur größeren ergibt sich damit zu:

$$\text{Startwert}: s'(n+1) = \frac{a(n)}{2} \cdot \Delta t^2 + v(n) \cdot \Delta t + \text{MIN}[s(n), s'(n)] - \text{Tol1}$$

$$\text{Endwert}: e'(n+1) = \frac{a(n)}{2} \cdot \Delta t^2 + v(n) \cdot \Delta t + \text{MAX}[e(n), e'(n)] + \text{Tol2}$$

(8)

Tol1 ist beim Rollen von links nach rechts die Toleranz des Startwertes. Sie kann kleiner als die Toleranz Tol2 des Endwertes sein, da die Position 352 der Startgrenze 35 zum Zeitpunkt n definitiv kleiner als die Position 352 der Startgrenze 35 zum Zeitpunkt n+1 ist. Damit kann als die vorherzusagende Position 351 der Startgrenze 35 zum Zeitpunkt n+1 theoretisch die tatsächliche Position 352 der Startgrenze 35 zum Zeitpunkt n genommen werden und Tol1 den Wert 0 annehmen. Da aber das Erfassen des Abrollendes innerhalb der Abrollsequenz stattfindet und der Richtungswechsel ein Merkmal für das Abrollende ist, muss eine bestimmte Größe für die Toleranz Tol1 verwendet werden.

Bei umgekehrter Rollrichtung verändern sich die Formeln (8) zu:

$$\text{Startwert}: s'(n-1) = \frac{-a(n)}{2} \cdot \Delta t^2 - v(n) \cdot \Delta t + \text{MIN}[s(n), s'(n)] - \text{Tol2}$$

$$\text{Endwert}: e'(n-1) = \frac{-a(n)}{2} \cdot \Delta t^2 - v(n) \cdot \Delta t + \text{MAX}[e(n), e'(n)] + \text{Tol1}$$

(9)

Hierbei kann Tol1 wieder kleiner als Tol2 sein, da der Rollvorgang von rechts nach links durchgeführt wird und die Endgrenze 36 zum Zeitpunkt n definitiv größer als die Position 362 der Endgrenze 36 zum Zeitpunkt n+1 ist.

Zur Vorhersage der Grenzen 35 und 36 des Rechtecks 33 gibt es noch vielfältige andere Berechnungsmöglichkeiten bis hin zur Verwendung einer tanh-Funktion.

Es ist auch möglich, mit einer festen Größe des Rechtecks 33 zu arbeiten und den hier vorgestellten Algorithmus zum Finden der Grenzen 35 und 36 der den Fingerabdruck 11 umschließenden Figur 32 zu benutzen und die Lage des Rechtecks 33 mit der festen Größe an die geänderte Position der umschließenden Figur 32 anzupassen. D.h., anhand des im aktuellen Bild 31 abgebildeten Fingerabdrucks 11 wird festgestellt, welche maximale Rechteckbreite notwendig ist, um bei üblicher Objektbewegung sicherzustellen, dass der Fingerabdruck 11 vom Rechteck 33 nicht beschnitten wird. Danach wird, wie weiter oben beschrieben, abgeleitet, wo sich die nächsten Positionen der Grenzen 35 und 36 der umschließenden Figur 32 befinden. Aus diesen Werten ergibt sich die Position des nachfolgenden Rechtecks 33 und die feste Rechteckgröße muss so um die berechnete umschließende Figur 32 gelegt werden, dass die Abstände der Grenzen des Rechtecks 33 zu den Grenzen aus minimalem Startwert und maximalem Endwert der umschließenden Figur 32 allseitig gleich sind. Die daraus folgende Lage des festen Rechtecks 33 wird in der Bildaufnahmeeinheit 2 als aktiver Pixelbereich 23 für das nachfolgende Bild 31 programmiert. Die Positionierung des stets gleich großen Rechtecks 33 kann auch - wie weiter oben beschrieben - mit Hilfe eines Schwerpunktsalgorithmus durchgeführt werden, der z.B. den Flächenschwerpunkt des Fingerabdrucks 11 sucht und um diesen das feste Rechteck 33 legt. Das hat aber zur Folge, dass eine Beschneidung des Fingerabdrucks 11 nicht ausgeschlossen werden kann.

Das Ausschneiden eines den Fingerabdruck 11 enthaltenden vergrößerten Rechtecks 33 kann auch außerhalb der Bildaufnahmeeinheit 2 geschehen, wenn die Datenrate bei Auslesung des kompletten Sensors 22 ausreichend, aber das begrenzende Element für die erforderliche Datenrate der Übertragungskanal ist. In diesem Fall kann das erfindungsgemäße Verfahren in gleicher Weise Anwendung finden, nur dass als Rechengrundlage das Vollbild als Bild 31 vorliegt und nicht bereits ein ausgewählter aktiver Pixelbereich 23. Es ist dann nicht mehr notwendig, eine Vorhersage zu treffen, wo die nächste Start- oder Endgrenze 35 oder 36 liegt, da man das Bild 31 als Vollbild der Bildaufnahmeeinheit 2 zur Verfügung hat, so dass man auf Berechnung von Geschwindigkeiten und Beschleunigungen verzichten kann. D.h.

durch eine Bildaufnahmeeinheit 2 mit hoher Bildrate wird das Vollbild in der Verarbeitungseinheit 5 (gemäß **Fig. 5)** eingelesen, die die Grenzen 35 und 36 des Fingerabdrucks 11 (umschließende Figur 32) und ein vergrößertes Rechteck 33 bestimmt und nur den Teil des Vollbildes, der dem Inhalt des aktuell ermittelten vergrößerten Rechtecks 33 entspricht, über das Interface 55 an die externe Recheneinheit 4 weitergibt.

Tritt beim Abrollvorgang trotz aller Sicherheitsvorkehrungen (Toleranzzugaben) bei der Vorhersage ein Beschneiden des Fingerabdrucks 11 auf, so wird z.B. beim Abrollen von links nach rechts in den zwei möglichen Fällen wie folgt verfahren.

1. Beschneiden des Fingers durch die Startgrenze 35 des Rechtecks 33

Bei diesem Fehler, der dadurch verursacht wurde, dass sich der Finger 1 langsamer als vorausberechnet bewegt hat, wird ohne erneute Berechnung von Geschwindigkeit bzw. Beschleunigung die Startgrenze 35 als Eingangswert beibehalten, die Toleranz aber vergrößert.

2. Beschneiden des Fingers durch die Endgrenze 36 des Rechtecks 33

Da die Ursache des Fehlers darin liegt, dass sich der Finger 1 schneller bewegt hat als vorausberechnet, wird bei Berechnung der nächsten Position des umschließenden Rechtecks 33 bei Annahme der gleichen Geschwindigkeit die doppelte Toleranzzugabe verwendet.

Damit wird sichergestellt, dass sich der Fingerabdruck 11 im nächsten Bild 31 innerhalb der Start- und Endgrenzen 35 und 36 des Rechtecks 33 befindet.

Die RT-Routine 64 ist, wie in **Fig. 1** ersichtlich, von der Auflageerkennung 61 und einer Abrollschlusserkennung 65 (RER-Routine) umgeben. PR-Routine 61 und RER-Routine 65 prüfen, ob während des Abrollvorgangs der Finger 1 abgehoben wurde bzw. der Finger 1 über eine Folge von Bildern 31 in entgegengesetzter Richtung zur detektierten Rollrichtung bewegt wurde. Wurde während des Abrollens der Finger 1 abgehoben, so wird dies durch die PR-Routine 61 detektiert und als Abrollschluss interpretiert. Die andere Möglichkeit der Beendigung der RT-Routine 64 wird durch eine Abrollschlusserkennung 65 bewirkt, die nachfolgend erklärt wird.

Abrollschlusserkennung 65 (RER-Routine)

Mit einer RER-Routine 65 wird festgestellt, ob ein Abrollvorgang beendet worden ist oder nicht. Dabei wird auf die von der RT-Routine 64 bestimmten Positionen der Start- und Endgrenzen 35 und 36 des Rechtecks 33 zurückgegriffen. Bei einem Abrollvorgang sollte der Anwender, wenn er den Rollvorgang beenden will, dazu aufgefordert werden, den Finger 1 entgegen der ursprünglichen Rollrichtung zu rollen. Damit verändern sich die durch den RT-Algorithmus bestimmten Grenzen 35 und 36 (z.B. über mehr als drei Bilder 31) entgegen der ursprünglichen Rollrichtung. Dies kann dann eindeutig als Abrollschluss interpretiert werden. Um die RER-Routine 65 robust zu machen, sind zweckmäßig 5 Bilder notwendig, um sicher zu gehen, dass der Abrollvorgang beendet wurde.

Ebenfalls als Abrollschluss wird das Abheben des Fingers 1 gewertet, was durch die oben beschriebene PR-Routine 61 festgestellt wird. Ist der Abrollschluss detektiert worden, werden in der Bildaufnahmeeinheit 2 die Register, in denen das adaptierte Rechteck 33 als aktiver Pixelbereich 23 des Sensors 22 gespeichert war, gelöscht, so dass wieder die gesamte Sensorfläche aktiv geschaltet wird.

Die oben beschriebenen Abläufe können auch dann Anwendung finden, wenn für die Aufnahme eines kompletten Fuß- oder Handabdrucks eine große aktive Fläche der Bildaufnahmeeinheit 2 genutzt werden muss und für die Aufnahme eines abzurollenden Fingers 1 nur ein kleiner Teilbereich derselben Sensorfläche benötigt wird. Mit einem Sensor 22, der über die besondere Möglichkeit des "Windowing" verfügt, kann dann sowohl die großflächige Aufnahme mit der notwendigen Auflösung als auch durch die erfindungsgemäße Steuerung des aktiven Pixelbereichs 23 des Sensors 22 die erheblich höhere Bildrate für die Aufnahme einer schnellen Bildfolge des abrollenden Fingers 1 realisiert werden.

Um die in **Fig. 1** aufgezeigten Abläufe realisieren zu können, ist es notwendig, eine schnelle Steuerungshardware als Verarbeitungseinheit 5 zur Verfügung zu haben, um nicht mit sämtlichen Berechnungsroutinen zur Steuerung des aktiven Pixelbereichs 23 die Recheneinheit 4, die zur Bildverarbeitung im Sinne des Zusammensetzens der sukzessive ausgelesenen Bilder 31 vorgesehen ist, zu belasten. In **Fig. 5** ist ein Aufbau dargestellt, der anschließend an die Bildaufnahmeeinheit 2, eine Logikeinheit 51, einen Prozessor 54, einen Programmspeicher 52, einen Datenspeicher 53 und ein Interface 55 aufweist, wobei die Logikeinheit 51 und der Prozessor 54 als Datenverarbeitungs- oder Recheneinheit zusammengefasst sein können. Auch der Programm- und Datenspeicher 67 und 68 können zu einem Speicher zusammengefasst werden. Als Prozessor 54 könnte auch die CPU der externen Recheneinheit 4 mit genutzt werden. Über den Steuerbus 56 tauschen die Logikeinheit 51, der Prozessor 54 und das Interface 55 für das Abrollen relevante Informationen aus. Weiterhin sind die Logikeinheit 51 und Interface 55 über den Bilddatenbus 57 zur Übertragung der Bilddaten miteinander verbunden.

Die Bildaufnahmeeinheit 2, deren Sensor auf CMOS- oder CCD-Technologie basiert, enthält vorzugsweise eine Ansteuerungsschaltung und einen Analog/Digital-Wandler. Somit liegt am Ausgang der Bildaufnahmeeinheit 2 ein Fingerabdruck 11 als zweidimensionales digitales Bild 31 vor. Dieses wird über die Logikeinheit 51 in den Datenspeicher 53 geschrieben. In der Verarbeitungseinheit 5 werden die oben beschriebenen Algorithmen und Verarbeitungsroutinen ausgeführt. Die Logikeinheit 51 kann durch einen FPGA (Field Programmable Gate Array), PLD (Programmable Logic Device), ASIC (Application Specific Integrated Circuit) realisiert werden. Als Prozessor 54 kann ein Mikrocontroller (MCU), ein Mikroprozessor (MPU) oder einen digitaler Signalprozessor (DSP) verwendet werden.

Auf den Prozessor 54 kann auch ganz verzichtet werden, wenn die Logikeinheit 51 in der Lage ist, alle Funktionen inklusive der Kommunikation mit dem Interface 55 selbst durchzuführen. Umgekehrt kann auch auf die Logikeinheit 51 verzichtet werden, wenn der Prozessor 54 in der Lage ist, alle Aufgaben der Logikeinheit 51 mit zu realisieren. Hierfür müsste dann der Bilddatenbus 57 vom Prozessor 54 zum Interface 55 geführt werden und eine direkte Ankopplung des Prozessors 54 an den Datenspeicher 53 existieren. Das Interface 55 stellt die Schnittstelle nach außen dar und kann beliebig sein (z.B. USB2.0, IEEE1394, Ethernet). Bei einem leistungsfähigen Interface 55, also einer Schnittstelle mit einer hohen Datenübertragungsrate, können die Verarbeitungs-Routinen 61 bis 65 teilweise oder vollständig auch außerhalb, z.B. mit der in Fig. 5 dargestellten externen Recheneinheit 4, ausgeführt und über das Interface 55 (und ggf. die Logikeinheit 51) die Einstellung des aktiven Pixelbereichs 23 im Register der Bildaufnahmeeinheit 2 gesteuert werden.

Bezugszeichenliste

| | |
|---|---|
| 1 | Finger |
| 11 | Fingerabdruck |
| 12, 12a-e | Bildstreifen |
| 13, 14, 16 | Papillarlinie |
| 131-133 | (abgebildete) Segmente |
| 141-143 | Segmente |
| 15a-c | durchgezogene Ellipse |
| 15d, 15e | gestrichelte Ellipse |
| 16a-e | Linienabtrennungen |
| 161 | Linienverzweigung |
| 162-164 | Papillarlinienende |
| 17 | Schnittfläche |

| | |
|---|---|
| 2 | Bildaufnahmeeinheit |
| 21 | Aufnahmefläche |
| 22 | Sensor |
| 23 | aktiver Pixelbereich |
| 24 | Beleuchtungseinheit |
| 25 | Prisma |
| 26 | Kamera |

| | |
|---|---|
| 3 | Gesamtbild |
| 31 | Bild |
| 32 | umschließende Figur |
| 33 | vergrößertes Rechteck |
| 34 | Schwerpunkt |
| 35 | Startgrenze |
| 36 | Endgrenze |

| | |
|---|---|
| 4 | (externe) Recheneinheit |
| 41 | Ringpufferspeicher |
| 5 | Verarbeitungseinheit |
| 51 | Logikeinheit |
| 52 | Programmspeicher |
| 53 | Datenspeicher |
| 54 | Prozessor |

| 55 | Interface |
|---|---|
| 56 | Steuerbus |
| 57 | Bilddatenbus |

| 61 | Auflageerkennung (PR-Routine), |
|---|---|
| 62 | Bewegungsverfolgung (MT-Routine), |
| 63 | Abrollstart-Erkennung (RSR-Routine), |
| 64 | Abrollverfolgung (RT-Routine) |
| 65 | Abrollschluss-Erkennung (RER-Routine) |

| 71, 72 | Gradientenbild |
|---|---|
| 73, 74 | Differenzwert |
| 75, 76 | Differenzenzähler |
| 77 | Zeilenzähler |
| 78 | Spaltenzähler |

| 81, 82 | Gradientenbild |
|---|---|
| 83, 84 | Differenzwert |
| 85, 86, 87, 88 | Ortshistogramm |

**Patentansprüche**

1. Verfahren zur elektronischen Aufnahme eines bewegten Objekts, insbesondere zur Aufnahme eines an einer Aufnahmefläche abgerollten Fingers, wobei das Objekt mit seinen Strukturen während der Bewegung mittels einer ortsauflösenden Bildaufnahmeeinheit in einer Folge von Einzelbildern erfasst und als zweidimensionales elektronisches Bild verarbeitet wird, **dadurch gekennzeichnet, dass**

   - von mindestens einem Bild (31) der aus der Bildaufnahmeeinheit (2) ausgelesenen Einzelbilder aus Lage und Größe des Objekts (1) eine das Objekt (1) umschließende Figur (32) ermittelt wird,
   - aus der umschließenden Figur (32) ein durch Toleranzzugaben ($\Delta$) vergrößertes Rechteck (33), das parallel zu Zeilen- und Spaltenrichtung des in der Bildaufnahmeeinheit (2) enthaltenen Sensors (22) ausgerichtet ist, bestimmt wird, und
   - das vergrößerte Rechteck (33) zur Vorhersage und Einstellung der Größe und Lage eines aktiven Pixelbereichs (23) im Sensor (22) für mindestens ein nachfolgend auszulesendes Bild (31) verwendet wird, so dass der ausgelesene aktive Pixelbereich (23) infolge seiner Anpassung stets klein gehalten und eine höhere Bildrate der Sensorauslesung oder Datenübertragung realisiert wird.

2. Verfahren nach Anspruch 1, **dadurch gekennzeichnet, dass**
   die umschließende Figur (32) des Objektabbildes (11) des aktuell abgetasteten Bildes (31) durch je ein in Spalten- und in Zeilenrichtung gebildetes Gradientenbild (81; 82) ermittelt wird, wobei zur Erzeugung des Gradientenbildes (81; 82) für jedes Pixel eine Differenz (83; 84) benachbarter Grauwerte in Zeilen- oder in Spaltenrichtung gebildet wird.

3. Verfahren nach Anspruch 2, **dadurch gekennzeichnet, dass**
   für jedes Pixel des Gradientenbildes (81; 82) die Differenz (83; 84) benachbarter Grauwerte aus den Grauwerten des Vorgänger- und des Nachfolgerpixels der Zeile oder Spalte im aktuellen Bild (31) gebildet wird.

4. Verfahren nach Anspruch 2, **dadurch gekennzeichnet, dass**
   für jedes Pixel des Gradientenbildes (81; 82) die Differenz (83; 84) benachbarter Grauwerte aus den Grauwerten des Vorvorgänger- und des Nachnachfolgerpixels der Zeile oder Spalte im aktuellen Bild (31) gebildet wird.

5. Verfahren nach Anspruch 2, **dadurch gekennzeichnet, dass**
   aus den beiden Gradientenbildern (81; 82) für die Zeilen und die Spalten des aktuellen Bildes (31) Start- und Endwerte der umschließenden Figur (32) des Objektabbildes (11) ermittelt werden, wobei in jedem Gradientenbild (81; 82) eine erste und eine letzte signifikante Differenz benachbarter Grauwerte zur Berechnung der Start- und Endwerte der das Objekt (1) umschließenden Figur (32) bestimmt wird.

6. Verfahren nach Anspruch 5, **dadurch gekennzeichnet, dass**

die signifikanten Differenzen durch Überschreiten von Schwellwerten ermittelt werden.

7. Verfahren nach Anspruch 5, **dadurch gekennzeichnet, dass**
in mindestens einer Dimension, die der Hauptbewegungsrichtung des Objekts (1) entspricht, von den aus dem Gradientenbild (81; 82) ermittelten Start- und Endwerten jeweils ein Mittelwert berechnet wird, wobei die Mittelwerte die Grenzen (35; 36) einer rechteckigen umschließenden Figur (32) um das Objektabbild (11) bilden.

8. Verfahren nach Anspruch 5, **dadurch gekennzeichnet, dass**
in mindestens einer Dimension, die der Hauptbewegungsrichtung des Objekts (1) entspricht, von den aus dem Gradientenbild (81; 82) ermittelten Start- und Endwerten jeweils ein Medianwert gebildet wird, wobei die Medianwerte die Grenzen (35; 36) einer rechteckigen umschließenden Figur (32) um das Objektabbild (11) bilden.

9. Verfahren nach Anspruch 5, **dadurch gekennzeichnet, dass**
in mindestens einer Dimension, die der Hauptbewegungsrichtung des Objekts (1) entspricht, die Start- und Endwerte der Zeilen oder Spalten in je ein Ortshistogramm (85, 86; 87, 88) eingetragen werden, wobei die Orte, bei der die Häufigkeitsverteilung der Start- und der Endwerte einen definierten Wert annimmt, die Grenzen (35; 36) einer rechteckigen umschließenden Figur (32) um das Objektabbild (11) bilden.

10. Verfahren nach Anspruch 9, **dadurch gekennzeichnet, dass**
im Ortshistogramm (85, 86; 87, 88) als Ort der Grenze (35; 36) der umschließenden Figur (32) der erste bzw. der letzte gültige Wert der Häufigkeitsverteilung verwendet wird.

11. Verfahren nach Anspruch 9, **dadurch gekennzeichnet, dass**
im Ortshistogramm (85, 86; 87, 88) als Ort der Grenze (35; 36) der umschließenden Figur (32) ein Wert der Häufigkeitsverteilung verwendet wird, der einen vorbestimmten Schwellwert erst- oder letztmalig überschreitet.

12. Verfahren nach Anspruch 9, **dadurch gekennzeichnet, dass**
im Ortshistogramm (85, 86; 87, 88) als Ort der Grenze (35; 36) der umschließenden Figur (32) ein Wert der Häufigkeitsverteilung verwendet wird, ab dem bzw. bis zu dem alle anderen Werte der Summe der Häufigkeiten den Schwellwert überschreiten.

13. Verfahren nach Anspruch 9, **dadurch gekennzeichnet, dass**
im Ortshistogramm (85, 86; 87, 88) als Ort der Grenze (35; 36) der umschließenden Figur (32) der Wert der größten Häufigkeit verwendet wird.

14. Verfahren nach einem der Ansprüche 9 bis 13, **dadurch gekennzeichnet, dass**
für die Ermittlung der Grenzen (35; 36) der umschließenden Figur (32) nur die Start- und Endwerte ausgewählter Zeilen oder Spalten des Gradientenbildes (81; 82) verwendet werden.

15. Verfahren nach Anspruch 1, **dadurch gekennzeichnet, dass**
die Toleranzzugabe ($\Delta$) zur Erzeugung des vergrößerten Rechtecks (33) in Abhängigkeit von einem detektierten Bewegungsablauf des Objektabbildes (11) unterschiedlich festgelegt wird, wobei aus mindestens zwei vorhergehend ausgelesenen Bildern (31) nach Bestimmung von Grenzen (35; 36) der jeweiligen umschließenden Figur (32) unterschiedliche Bewertungsalgorithmen auf Basis der zeitlichen Veränderung der Grenzen (35; 36) der Figur (32) in den aufeinander folgenden Bildern (31) angewendet werden.

16. Verfahren nach einem der vorhergehenden Ansprüche, **dadurch gekennzeichnet, dass**
als Objekt ein Finger (1) auf einer Aufnahmefläche (21) abgerollt wird, wobei als Objektabbild in jedem ausgelesenen Bild (31) ein aktueller Fingerabdruck (11) aufgenommen wird.

17. Verfahren nach Anspruch 16, **dadurch gekennzeichnet, dass**
eine Auflageerkennungs-Routine (61) auf die ausgelesenen Bilder (31) angewendet wird, die bei Ermittlung einer nicht ausreichenden Anzahl von durch einen Fingerabdruck hervorgerufenen Differenzwerte die Berechnung der Toleranzzugabe ($\Delta$) und nachfolgende Vorhersagen und Einstellungen des aktiven Pixelbereichs (23) des Sensors (22) unterbindet.

18. Verfahren nach Anspruch 16, **dadurch gekennzeichnet, dass**
eine Bewegungsverfolgungs-Routine (62) auf die ausgelesenen Bilder (31) angewendet wird, die bei nicht deutlich gerichteter Bewegung der umschließenden Figur (32) eine allseitig gleichmäßigen Toleranzzugabe (Δ) um die Grenzen (35; 36) der umschließenden Figur (32) herum bestimmt, die so groß gewählt wird, dass bei beliebiger Bewegung des Objekts (1) in objekttypischem Maße das vergrößerte Rechteck (33) das Objekt (1) innerhalb der Zeit der Auslesung wenigstens eines nächsten Bildes (31) nicht beschneidet.

19. Verfahren nach Anspruch 18, **dadurch gekennzeichnet, dass**
die Bewegungsverfolgungs-Routine (62) in eine Abrollverfolgungs-Routine (64) überführt wird, wenn sich in einer definierten Anzahl von aufeinanderfolgenden Bildern (31) die Grenzen (35; 36) der umschließenden Figur (32) deutlich in eine ausgezeichnete Richtung verschoben haben, wobei für die in Bewegungsrichtung des Fingers (1) bewegte Grenze (35; 36) der umschließenden Figur (32) aus einer errechneten Geschwindigkeit der bewegten Grenze (35; 36) eine solche Toleranzzugabe (Δ) ermittelt wird, dass das vergrößerte Rechteck (33) den Fingerabdruck (11) innerhalb der Zeit von wenigstens einem nachfolgend ausgelesenen Bild (31) nicht beschneidet.

20. Verfahren nach Anspruch 19, **dadurch gekennzeichnet, dass**
die Abrollverfolgungs-Routine (64) durch eine Abrollstarterkennung (63) eingeleitet und durch eine Abrollschlusserkennung (65) beendet wird, wobei die Abrollstarterkennung (63) bei Vorliegen einer bestimmten festgelegten Zahl von in gleicher Richtung fortschreitenden Verschiebungen der Grenzen (35; 36) der umschließenden Figur (32) die Abrollverfolgungs-Routine (64) auslöst und die Abrollschlusserkennung bei einer Richtungsumkehr der Bewegung der Grenzen (35; 36) der umschließenden Figur (32) die Abrollverfolgungs-Routine (64) beendet.

21. Verfahren nach Anspruch 16, **dadurch gekennzeichnet, dass**
eine Abrollverfolgungs-Routine (64) auf die ausgelesenen Bilder (31) angewendet wird, wenn sich in einer definierten Anzahl von aufeinanderfolgenden Bildern (31) die Grenzen (35; 36) der umschließenden Figur (32) deutlich in eine ausgezeichnete Richtung verschoben haben, wobei für die in Bewegungsrichtung des Fingers (1) bewegte Grenze (35; 36) der umschließenden Figur (32) aus einer errechneten Geschwindigkeit der bewegten Grenze (35; 36) eine solche Toleranzzugabe (Δ) ermittelt wird, dass das vergrößerte Rechteck (33) den Fingerabdruck (11) innerhalb der Zeit von wenigstens einem nachfolgend ausgelesenen Bild (31) nicht beschneidet.

22. Verfahren nach Anspruch 20, **dadurch gekennzeichnet, dass**
beim Abrollen eines Fingers (1) entlang einer Aufnahmefläche (21) die Abrollstarterkennung (63) eine Zwischenspeicherung aller zur Abrollstarterkennung (63) verwendeten Bilder (31) vornimmt, um bereits für die Abrollstarterkennung (63) ausgelesene Bilder (31) für die vollständige Zusammensetzung des Gesamtbildes (3) des abgerollten Fingers (1) zur Verfügung zu halten.

23. Anordnung zur elektronischen Aufnahme eines bewegten Objekts, insbesondere zur Aufnahme eines an einer Aufnahmefläche (21) abgerollten Fingers (1), mit einer Bildaufnahmeeinheit (2) zur Aufnahme einer Folge von zweidimensionalen Einzelbildern eines bewegten Objekts, wobei zur Zusammensetzung eines Gesamtbildes (3) des bewegten Objekts (1) die Einzelbilder örtliche Überlappungen aufweisen, **dadurch gekennzeichnet, dass**

- der Bildaufnahmeeinheit (2) eine Logikeinheit (51) zur laufenden Berechnung eines eingeschränkten Bildbereichs, der das Objektabbild eng einschließt, auf Basis mindestens eines von der Bildaufnahmeeinheit (2) zuvor ausgelesenen Bildes (31) nachgeordnet ist,
- der Logikeinheit (51) ein Programmspeicher (52), ein Datenspeicher (53) ein Prozessor (54) und ein Interface (55) zugeordnet sind, wobei der Prozessor (54) zur Steuerung der Datenflüsse und des von der Logikeinheit (51) berechneten eingeschränkten Bildbereichs als aktiven Pixelbereich (23) für das nächste aus der Bildaufnahmeeinheit (2) ausgelesene Bild (31) vorgesehen ist, und
- das Interface zum Datentransfer der Bilder (31), die von der Logikeinheit (51) bezüglich Größe und Lage des Pixelbereichs (23) definiert gesteuert sind, an eine externe Rechnereinheit (4) ausgebildet ist, wobei die Rechnereinheit (4) eine Bildverarbeitung zum Zusammensetzen der zeitlich aufeinanderfolgend aufgenommenen Bilder (31) zu einem Gesamtbild (3) aufweist.

24. Anordnung nach Anspruch 23, **dadurch gekennzeichnet, dass**
die Bildaufnahmeeinheit (2) einen optoelektronischen Sensor (22) aufweist.

25. Anordnung nach Anspruch 23, **dadurch gekennzeichnet, dass**
die Bildaufnahmeeinheit (2) einen beliebigen Kontaktsensor, insbesondere einen thermischen oder kapazitiven Sensor enthält.

**26.** Anordnung nach Anspruch 23, **dadurch gekennzeichnet, dass**
die Bildaufnahmeeinheit (2) einen Ultraschallsensor aufweist.

**27.** Anordnung nach Anspruch 23, **dadurch gekennzeichnet, dass**
die Bildaufnahmeeinheit (2) einen Sensor mit niedriger Bildrate aufweist, wobei die niedrige Bildrate nur auf die Auslesung aller Pixel des Sensors (22) bezogen ist, die Auslesung von Bildern (31) aus beliebig programmierbaren aktiven Pixelbereichen (23) jedoch mit wesentlich größerer Bildrate realisierbar ist.

**28.** Anordnung nach Anspruch 27, **dadurch gekennzeichnet, dass**
die Bildaufnahmeeinheit (2) einen großflächigen Sensor (22) aufweist, bei dem durch eine einzige Sensorauslesung ein kompletter Fuß- oder Handabdruck mit hoher Auflösung, aber niedriger Bildrate realisierbar ist und bei dem zur Aufnahme einzelner abgerollter Finger (1) ein definierter Teilbereich der Aufnahmefläche (21) der Bildaufnahmeeinheit (2) festgelegt ist, wobei der Sensor (22) in einem beschränkten aktiven Pixelbereich (23), der dem definierten Teilbereich der Aufnahmefläche (21) zugeordnet ist, zur Auslesung von pixelreduzierten Bildern (31) ansteuerbar ist, dass so die Bildrate zur Aufnahme abgerollter Fingerabdrücke (11) erheblich erhöht ist.

**29.** Anordnung nach Anspruch 23, **dadurch gekennzeichnet, dass**
die Bildaufnahmeeinheit (2) einen Sensor mit hoher Bildrate aufweist, wobei die Auslesung von Bildern (31) aus beliebig zugriffsfähigen Pixelbereichen des Datenspeichers (53) erfolgt, um nachfolgend die Datenrate der Übertragung über das Interface (54) zu erhöhen.

**Claims**

**1.** A method for electronic recording of a moving object, in particular for recording a finger rolled on a recording surface, said object and its structures being captured during their movement, as a series of individual images, by means of a spatially resolving image-recording unit and being processed as a two-dimensional electronic image, **characterized in that**

    - a figure (32) enclosing the object (1) is determined from the position and size of the object (1) in at least one image (31) among the individual images read out from the image-recording unit (2);
    - a rectangle (33), which is enlarged by tolerance allowances ( ) and is aligned in parallel with the row and column directions of the sensor (22) contained in the image-recording unit (2), is determined from the enclosing figure (32), and
    - the enlarged rectangle (33) is used to predict and adjust the size and position of an active pixel region (23) in the sensor (22) for at least one image (31) to be subsequently read out, so that the read out active pixel region (23), due to its adjustment, is always kept small and a higher image rate of the sensor readout or data transmission is realized.

**2.** Method according to claim 1, **characterized in that**
the enclosing figure (32) of the object image (11) of the currently scanned image (31) is determined by one gradient image (81; 82) each formed in the column direction and in the row direction, respectively, with a difference (83; 84) being formed between adjacent grayscale values in the row direction or in the column direction for each pixel in order to generate the gradient image (81; 82).

**3.** Method according to claim 2, **characterized in that**
for each pixel of the gradient image (81; 82) the difference (83; 84) between adjacent grayscale values is formed from the grayscale values of the previous pixel and of the subsequent pixel of the row or colum in the current image (31).

**4.** Method according to claim 2, **characterized in that**
for each pixel of the gradient image (81; 82) the difference (83; 84) between adjacent grayscale values is formed from the grayscale values of the pixel preceding said previous pixel and of the pixel following said subsequent pixel of the row or column in the current image (31).

**5.** Method according to claim 2, **characterized in that**
the two gradient images (81; 82) for the rows and columns of the current image (31) are used to determine start and end values of the enclosing figure (32) of the object image (11), and in each gradient image (81; 82) a first and a last significant difference between adjacent grayscale values is determined in order to calculate the start and end values of the figure (32) enclosing the object (1).

6. Method according to claim 5, **characterized in that**
said significant differences are determined by threshold values being exceeded.

7. Method according to claim 5, **characterized in that**
in at least one dimension, which corresponds to the principal direction of movement of the object (1), one average value each is calculated using the start and end values determined from the gradient image (81; 82), said average values forming the boundaries (35; 36) of a rectangular enclosing figure (32) around the object image (11).

8. Method according to claim 5, **characterized in that**
in at least one dimension, which corresponds to the principal direction of movement of the object (1), one median value each is calculated using the start and end values determined from the gradient image (81; 82), said median values forming the boundaries (35; 36) of a rectangular enclosing figure (32) around the object image (11).

9. Method according to claim 5, **characterized in that**
in at least one dimension, which corresponds to the principal direction of movement of the object (1), the start and end values of the rows or columns are entered into one spatial histogram (85, 86; 87, 88) each, wherein the locations at which the frequency distribution of the start and end values assumes defined values form the boundaries (35; 36) of a rectangular enclosing figure (32) around the object image (11).

10. Method according to claim 9, **characterized in that**
the first or the last valid value, respectively, of the frequency distribution is used in the spatial histogram (85, 86; 87, 88) as the location of the boundary (35; 36) of the enclosing figure (32).

11. Method according to claim 9, **characterized in that**
a frequency distribution value that exceeds a predetermined threshold value for the first time or for the last time is used in the spatial histogram (85, 86; 87, 88) as the location of the boundary (35; 36) of the enclosing figure (32).

12. Method according to claim 9, **characterized in that**
a frequency distribution value from which or up to which all other values of the sum of frequencies exceed the threshold value is used in the spatial histogram (85, 86; 87, 88) as the location of the boundary (35; 36) of the enclosing figure (32).

13. Method according to claim 9, **characterized in that**
the value of the greatest frequency is used in the spatial histogram (85, 86; 87, 88) as the location of the boundary (35; 36) of the enclosing figure (32).

14. Method according to any one of claims 9 to 13, **characterized in that**
only the start and end values of selected rows or columns of the gradient image (81; 82) are used to determine the boundaries (35; 36) of the enclosing figure (32).

15. Method according to claim 1, **characterized in that**
the tolerance allowance ( ) for generating the enlarged rectangle (33) is defined in different ways, as a function of a detected course of movement of the object image (11), applying different evaluation algorithms, which are based on the temporal change of the boundaries (35; 36) of the figure (32) in the sequential images (31), after determining the boundaries (35; 36) of the respective enclosing figure (32), said algorithms being based on at least two previously read out images (31).

16. Method according to any one of the preceding claims, **characterized in that**
the object is a finger (1) being rolled on a recording surface (21), and a current finger print (11) is recorded as the object image in each read out image (31).

17. Method according to claim 16, **characterized in that**
a put-on recognition routine (61) is applied to the read out images (31), said routine preventing the calculation of the tolerance allowance ( ) and subsequent predictions and adjustments of the active pixel region (23) of the sensor (22) if an insufficient number of difference values resulting from a fingerprint has been determined.

**18.** Method according to claim 16, **characterized in that**
a movement tracking routine (62) is applied to the read out images (31), which routine, in case of a not clearly oriented movement of the enclosing figure (32), determines a uniform tolerance allowance ( ) on all sides around the boundaries (35; 36) of the enclosing figure (32), the size of said tolerance allowance being selected such that, wherever the object (1) moves to an extent that is typical of the object, the enlarged rectangle (33) does not trim the object (1) during the readout time of at least one subsequent image (31).

**19.** Method according to claim 18, **characterized in that**
the movement tracking routine (62) is transformed into a roll tracking routine (64) when the boundaries (35; 36) of the enclosing figure (32) have been clearly shifted in an indicated direction in a defined number of sequential images (31), and when the boundary (35; 36) of the enclosing figure (32) is being moved in the movement direction of the finger (1), a tolerance allowance ( ) is determined from a calculated speed of the moved boundary (35; 36) such that the enlarged rectangle (33) does not trim the finger print (11) during the time of at least one subsequently read out image (31).

**20.** Method according to claim 19, **characterized in that**
the roll tracking routine (64) is started by a roll start recognition (63) and is ended by a roll end recognition (65), said roll start recognition (63) triggering the roll tracking routine (64), when a certain defined number of shifts of the boundaries (35; 36) of the enclosing figures (32) is present, which progress in the same direction, and the roll end recognition ends the roll tracking routine (64) upon a reversal of the direction of movement of the boundaries (35; 36) of the enclosing figure (32).

**21.** Method according to claim 16, **characterized in that**
a roll tracking routine (64) is applied to the read out images (31), when the boundaries (35; 36) of the enclosing figure (32) have clearly shifted in an indicated direction in a defined number of sequential images (31), wherein for the boundary (35; 36) of the enclosing figure (32) moved in the movement direction of the finger (1) such a tolerance allowance ( ) is determined from a calculated speed of the moved boundary (35; 36) that the enlarged rectangle (33) does not trim the finger print (11) within the time of at least one subsequently read out image (31).

**22.** Method according to claim 20, **characterized in that**
when rolling a finger (1) along a recording surface (21), the roll start recognition (63) effects intermediate storage of all images (31) used for roll start recognition (63) in order to keep images (31) already read out for roll start recognition (63) ready for completely assembling the overall image (3) of the rolled finger (1).

**23.** Assembly for electronic recording of a moving object, in particular for recording a finger (1) rolled on a recording surface (21), said assembly comprising an image-recording unit (2) for recording a series of two-dimensional individual images of a moving object, wherein there are local overlaps between the individual images in order to assemble an overall image (3) of the moving object (1), **characterized in that**

- a logic unit (51) for continuous calculation of a limited image region, tightly enclosing the object image, on the basis of at least one image (31) previously read out from the image-recording unit (2) is arranged following the image-recording unit (2);
- the logic unit (51) has assigned to it a program memory (52), a data memory (53), a processor (54), and an interface (55), the processor (54) being provided to control the data flows and the limited image region, which has been computed by the logic unit (51), as the active pixel region (23) for the next image (31) read out from the image-recording unit (2), and
- the interface is provided for data transfer of the images (31), which are controlled by the logic unit (51) in a defined manner with respect to the size and position of the pixel region (23), to an external computing unit (4), said computing unit (4) comprising an image processing unit for assembling an overall image (3) from the images (31) recorded in a chronological sequence.

**24.** Assembly according to claim 23, **characterized in that**
the image-recording unit (2) comprises an optoelectronic sensor (22).

**25.** Assembly according to claim 23, **characterized in that**
the image-recording unit (2) includes any type of contact sensor, in particular a thermal or capacitive sensor.

**26.** Assembly according to claim 23, **characterized in that**

the image-recording unit (2) comprises an ultrasonic sensor.

27. Assembly according to claim 23, **characterized in that**
the image-recording unit (2) comprises a sensor with a low image rate, said low image rate only relating to the reading out of all pixels of the sensor (22), whereas the reading out of images (31) from active pixel regions (23) that are programmable as desired can be realized with a substantially greater image rate.

28. Assembly according to claim 27, **characterized in that**
the image-recording unit (2) comprises a large-area sensor (22) by which one single sensor read-out operation allows to realize a complete footprint or handprint with a high resolution, but a low image rate, and by which a defined partial region of the recording surface (21) of the image-recording unit (2) is determined for recording individual fingers (1) rolled thereover, and the sensor (22) is controllable in a restricted active pixel region (23), assigned to the defined partial region of the recording surface (21), to read out reduced-pixel images (31), so that the image rate for recording rolled fingerprints (11) is considerably increased.

29. Assembly according to claim 23, **characterized in that**
the image-recording unit (2) comprises a sensor with a high image rate, and the reading out of images (31) is effected from pixel regions of the data memory (53) that are accessible at will in order to subsequently increase the data rate of the transmission via the interface (54).

## Revendications

1. Procédé d'enregistrement électronique d'un objet mouvant, notamment pour l'enregistrement d'un doigt roulé sur une surface d'enregistrement, ledit objet et ses structures étant saisies pendant leur mouvement, en une série d'images individuelles, au moyen d'une unité de prise de vue à résolution spatiale et étant traités en tant qu'image électronique bidimensionnelle, ledit procédé étant **caractérisé par**

   - la détermination, à l'aide de la position et de la taille de l'objet (1) dans au moins une image (31) parmi les images individuelles extraites de l'unité de prise de vue (2), d'une figure (32) enfermant l'objet (1);
   - la détermination, à l'aide de la figure enfermante (32), d'un rectangle (33) qui est aggrandi par des majorations de tolérance ( ) et est aligné parallèlement aux directions des lignes et des colonnes du capteur (22) contenu dans l'unité de prise de vue (2), et
   - l'utilisation dudit rectangle aggrandi (33) pour prédire et ajuster la taille et la position d'une région active de pixels (23) dans le capteur (22) pour au moins une image (31) à extraire ensuite, de sorte que l'ajustement de la région active de pixels (23) étant extraite permette de maintenir cette dernière petite et de réaliser un taux d'image plus élevé lors de la lecture du capteur ou de la transmission de données.

2. Procédé selon la revendication 1, **caractérisé en ce que**
la figure enfermante (32) de l'image d'objet (11) de l'image (31) actuellement balayée est déterminée par une image à gradient (81; 82) respectivement engendrée dans la direction des colonnes et dans la direction des lignes, et on forme, pour chaque pixel, une différence (83; 84) entre des valeurs de gris avoisinantes dans la direction des lignes ou dans la direction des colonnes afin d'engendrer l'image à gradient (81; 82).

3. Procédé selon la revendication 2, **caractérisé en ce que**
l'on forme, pour chaque pixel de l'image à gradient (81; 82), la différence (83; 84) entre des valeurs de gris avoisinantes à partir des valeurs de gris du pixel précédent et du pixel subséquent de la ligne ou de la colonne dans l'image actuelle (31).

4. Procédé selon la revendication 2, **caractérisé en ce que**
l'on forme, pour chaque pixel de l'image à gradient (81; 82), la différence (83; 84) entre des valeurs de gris avoisinantes à partir des valeurs de gris du pixel avant le pixel précédent et du pixel après le pixel subséquent de la ligne ou de la colonne dans l'image actuelle (31).

5. Procédé selon la revendication 2, **caractérisé en ce que**
les deux images à gradient (81; 82) pour les lignes et les colonnes de l'image actuelle (31) sont utilisées pour déterminer des valeurs de début et de fin de la figure enfermante (32) de l'image d'objet (11), et on détermine dans chaque image à gradient (81; 82) une première et une dernière différence significative entre des valeurs de gris avoisinantes afin de calculer les valeurs de début et de fin de la figure (32) enfermant l'objet (1).

6. Procédé selon la revendication 5, **caractérisé en ce que**
lesdites différences significatives sont déterminées par dépassement de valeurs de seuil.

7. Procédé selon la revendication 5, **caractérisé en ce que**
l'on calcule, en au moins une dimension qui correspond à la direction principale de mouvement de l'objet (1), une valeur moyenne respective des valeurs de début et de fin déterminées à partir de l'image à gradient (81; 82), ces valeurs moyennes constituant les limites (35; 36) d'une figure enfermante (32) rectangulaire autour de l'image d'objet (11).

8. Procédé selon la revendication 5, **caractérisé en ce que**
l'on calcule, en au moins une dimension qui correspond à la direction principale de mouvement de l'objet (1), une valeur médiane respective des valeurs de début et de fin déterminées à partir de l'image à gradient (81; 82), ces valeurs médianes constituant les limites (35; 36) d'une figure enfermante (32) rectangulaire autour de l'image d'objet (11).

9. Procédé selon la revendication 5, **caractérisé en ce que**
l'on entre, en au moins une dimension qui correspond à la direction principale de mouvement de l'objet (1), les valeurs de début et de fin des lignes ou des colonnes dans un histogramme spatiale (85, 86; 87, 88) respectif, et les endroits auxquels la distribution des fréquences des valeurs de début et de fin prend une valeur définie constituent les limites (35; 36) d'une figure rectangulaire enfermante (32) autour de l'image d'objet (11).

10. Procédé selon la revendication 9, **caractérisé en ce que**
l'on utilise, en tant qu'endroit de la limite (35; 36) de la figure enfermante (32) dans l'histogramme spatiale (85, 86; 87, 88), respectivement la première valeur valide et la dernière valeur valide de la distribution des fréquences.

11. Procédé selon la revendication 9, **caractérisé en ce que**
l'on utilise, en tant qu'endroit de la limite (35; 36) de la figure enfermante (32) dans l'histogramme spatiale (85, 86; 87, 88), une valeur de la distribution des fréquences dépassant pour la première fois ou pour la dernière fois une valeur de seuil prédéterminée.

12. Procédé selon la revendication 9, **caractérisé en ce que**
l'on utilise, en tant qu'endroit de la limite (35; 36) de la figure enfermante (32) dans l'histogramme spatiale (85, 86; 87, 88), une valeur de la distribution des fréquences à partir de laquelle ou jusqu'à laquelle toutes les autres valeurs de la somme des fréquences dépassent la valeur de seuil.

13. Procédé selon la revendication 9, **caractérisé en ce que**
l'on utilise, en tant qu'endroit de la limite (35; 36) de la figure enfermante (32) dans l'histogramme spatiale (85, 86; 87, 88), la valeur de la plus grande fréquence.

14. Procédé selon l'une quelconque des revendications 9 à 13, **caractérisé en ce que**
l'on utilise seulement les valeurs de début et de fin de lignes ou de colonnes sélectionnées de l'image à gradient (81; 82) pour déterminer les limites (35; 36) de la figure enfermante (32).

15. Procédé selon la revendication 1, **caractérisé en ce que**
l'on définie de manières différentes, en fonction d'une série de mouvements détectée de l'image d'objet (11), la majoration de tolérance ( ) pour engendrer le rectangle (33) aggrandi, appliquant différents algorithmes d'évaluation, qui sont basés sur le changement temporel des limites (35; 36) de la figure (32) dans les images séquentielles (31), après avoir déterminé des limites (35; 36) de la figure enfermante (32) respective, lesdits algorithmes étant basés sur au moins deux images (31) extraites au préalable.

16. Procédé selon l'une quelconque des revendications précédentes, **caractérisé en ce que**
l'objet est un doigt (1) qui est roulé sur une surface d'enregistrement (21) et une empreinte digitale actuelle (11) est enregistrée en tant qu'image d'objet dans chaque image extraite (31).

17. Procédé selon la revendication 16, **caractérisé en ce que**
l'on applique aux images extraites (31) une routine de détection d'appui (61) qui empêche la calculation de la majoration de tolérance ( ) ainsi que des prédictions et ajustements subséquents de la région active de pixels (23) du capteur (22) lorsqu'un nombre insuffisante de valeurs différentielles resultant d'une empreinte digitale a été déterminé.

**18.** Procédé selon la revendication 16, **caractérisé en ce que**
l'on applique aux images extraites (31) une routine de poursuite de mouvement (62) qui, en cas d'un mouvement de la figure enfermante (32) non pas distinctement dirigé, détermine une majoration de tolérance ( ) unitaire de tous les côtés autour des limites (35; 36) de la figure enfermante (32), la taille de cette tolérance étant choisie de sorte que, n'importe où l'objet (1) se déplace d'un degré typique pour l'objet, le rectangle (33) aggrandi ne déborde pas l'objet (1) pendant la durée d'extraction d'au moins une image (31) subséquente.

**19.** Procédé selon la revendication 18, **caractérisé en ce que**
la routine de poursuite de mouvement (62) est transformée en une routine de poursuite de roulement (64) lors d'un déplacement distincte des limites (35; 36) de la figure enfermante (32) dans une direction indiquée dans un nombre défini d'images (31) séquentielles, et lors du déplacement de la limite (35; 36) de la figure enfermante (32) dans la direction de mouvement du doigt (1), une majoration de tolérance ( ) est déterminée à partir d'une vitesse calculée de la limite déplacée (35; 36) de sorte que le rectangle (33) aggrandi ne déborde pas l'empreinte digitale (11) pendant le temps d'au moins une image (31) extraite ensuite.

**20.** Procédé selon la revendication 19, **caractérisé en ce que**
la routine de poursuite de roulement (64) est déclenchée par une détection de début de roulement (63) et est terminée par une détection de fin de roulement (65), ladite détection de début de roulement (63) déclenchant la routine de poursuite de roulement (64) lorsqu'il y a un certain nombre défini de déplacements des limites (35; 36) des figures enfermantes (32) qui progressent dans la même direction, et la détection de fin de roulement termine la routine de poursuite de roulement (64) lors d'un renversement de la direction de mouvement des limites (35; 36) de la figure enfermante (32).

**21.** Procédé selon la revendication 16, **caractérisé en ce que**
l'on applique aux images extraites (31) une routine de poursuite de roulement (64) lorsque les limites (35; 36) de la figure enfermante (32) ont été nettement déplacées dans une direction indiquée dans un nombre défini d'images séquentielles (31), le procédé comprenant la détermination, pour la limite (35; 36) de la figure enfermante (32) déplacée dans la direction de mouvement du doigt (1), d'une majoration de tolérance ( ), à partir d'une vitesse calculée de la limite déplacée (35; 36), de sorte que le rectangle (33) aggrandi ne déborde pas l'empreinte digitale (11) pendant le temps d'au moins une image (31) extraite ensuite.

**22.** Procédé selon la revendication 20, **caractérisé en ce que**
lors du roulement d'un doigt (1) sur une surface d'enregistrement (21), la détection de début de roulement (63) effectue une mémorisation intermédiaire de toutes les images (31) utilisées pour la détection de début de roulement (63) de sorte que les images (31) qui ont déjà été extraites pour la détection de début de roulement (63) soient tenues prêtes pour l'assemblage complète de l'image totale (3) du doigt roulé (1).

**23.** Ensemble d'enregistrement électronique d'un objet mouvant, notamment pour l'enregistrement d'un doigt (1) roulé sur une surface d'enregistrement (21), ledit ensemble comprenant une unité de prise de vue (2) destinée à enregistrer une série d'images individuelles bidimensionnelles d'un objet mouvant, et des chevauchements locaux étant présents entre les images individuelles pour l'assemblage d'une image totale (3) de l'objet mouvant (1), **caractérisé en ce que**

- l'on dispose, en aval de l'unité de prise de vue (2), une unitè logique (51) pour calculer continuellement, à partir d'au moins une image (31) extraite au préalable de l'unité de prise de vue (2), une région d'image limitée qui épouse étroitement le contour de l'image d'objet;
- l'on attribue à l'unité logique (51) une mémoire de programme (52), une mémoire de données (53), un processeur (54), et une interface (55), ledit processeur (54) étant destiné à commander les trains de données et la région d'image limitée qui a été calculée, par l'unité logique (51), en tant que région active de pixels (23) pour l'image (31) subséquente extraite de l'unité de prise de vue (2), et
- l'interface est prévue pour le transfert de données des images (31), qui sont commandées par l'unité logique (51) d'une manière définie par rapport à la taille et la position de la région de pixels (23), vers une unité de calcul externe (4), ladite unité de calcul (4) présentant un traitement d'image pour l'assemblage d'une image totale (3) à partir des images (31) enregistrées en séquence chronologique.

**24.** Ensemble selon la revendication 23, **caractérisé en ce que**
l'unité de prise de vue (2) comprend un capteur optoélectronique (22).

**25.** Ensemble selon la revendication 23, **caractérisé en ce que**
l'unité de prise de vue (2) contient n'importe quel capteur de contact, notamment un capteur thermique ou un capteur capacitif.

**26.** Ensemble selon la revendication 23, **caractérisé en ce que**
l'unité de prise de vue (2) comprend un capteur ultrasonique.

**27.** Ensemble selon la revendication 23, **caractérisé en ce que**
l'unité de prise de vue (2) comprend un capteur avec un taux d'image bas, ledit taux d'image bas concernant seulement l'extraction de tous les pixels du capteur (22), tandis que l'extraction d'images (31) de régions actives de pixels (23), qui peuvent être programmées au choix, peut être réalisée avec un taux d'images beaucoup plus élevé.

**28.** Ensemble selon la revendication 27, **caractérisé en ce que**
l'unité de prise de vue (2) comprend un capteur à grande surface (22) permettant de réaliser, par une seule lecture du capteur, une empreinte complète d'un pied ou d'une main à haute résolution, mais à un taux d'image bas, et permettant de déterminer une région partielle définie de la surface d'enregistrement (21) de l'unité de prise de vue (2) pour enregistrer des doigts individuels (1) roulés, et le capteur (22) pouvant être commandé, dans une région active de pixels (23) limitée qui est attribuée à la région partielle définie de la surface d'enregistrement (21), de manière à lire des images (31) réduites en pixels, de sorte que le taux d'image pour l'enregistrement d'empreintes de doigt roulées (11) soit nettement élevé.

**29.** Ensemble selon la revendication 23, **caractérisé en ce que**
l'unité de prise de vue (2) comprend un capteur présentant un taux d'image élevé, et que l'extraction d'images (31) est effectuée à partir de régions de pixels de la mémoire de données (53) qui sont accessibles au choix afin d'augmenter ensuite le taux de transfert de données via l'interface (54).

Fig. 1

Fig. 2

Fig. 3

**Fig. 4**

**Fig. 5**

EP 1 542 151 B1

Fig. 6

Fig. 7

Rollen nach rechts

Rollen nach links

1

21

11

Schnitt

| 1. Drittel | 2. Drittel | 3. Drittel |

| 1. Drittel | 2. Drittel | 3. Drittel |

11

34

35

2

Draufsicht

36

34

35

33

36

33

**Fig. 8a**

**Fig. 8b**

EP 1 542 151 B1

Dateneingang

Bild$_n$

Bild$_{n-1}$

Bild$_{n-p}$

Bild$_{n-2}$

Datenumlaufrichtung

41

# Fig. 9

Fig. 10a

Fig. 10b

# Fig.11a

# Fig.11b

# Fig.11c

$$v_A(n) = \frac{A(n) - A(n-1)}{T(n)}$$

$$v_E(n) = \frac{E(n) - E(n-1)}{T(n)}$$

$$v_A(n+1) = \frac{A(n+1) - A(n)}{T(n+1)}$$

$$v_E(n+1) = \frac{E(n+1) - E(n)}{T(n+1)}$$

$$a_A(n) = \frac{v_A(n+1) - v_A(n)}{T(n+1)}$$

$$a_E(n) = \frac{v_E(n+1) - v_E(n)}{T(n+1)}$$

EP 1 542 151 B1

Fig. 12a

Fig. 12b

Fig. 12c

**Fig. 13a**

**Fig. 13b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4933976 A
- US 5230025 A
- US 6483932 B
- WO 9741528 A
- DE 19851544 C1
- WO 0028470 A